Europäisches Patentamt

European Patent Office

Office européen des brevets

(19)

(11) Veröffentlichungsnummer : **0 238 848**
**B1**

(12) # EUROPÄISCHE PATENTSCHRIFT

(45) Veröffentlichungstag der Patentschrift :
05.04.89

(21) Anmeldenummer : 87102339.6

(22) Anmeldetag : 19.02.87

(51) Int. Cl.⁴ : **F 16 B   7/04**

(54) **Befestigungsvorrichtung mit einem Klemmverschluss zum lösbaren Angreifen an Hinterschneidungen aufweisenden Profilen.**

(30) Priorität : **10.03.86 DE 3607849**

(43) Veröffentlichungstag der Anmeldung :
**30.09.87 Patentblatt 87/40**

(45) Bekanntmachung des Hinweises auf die Patenterteilung : **05.04.89 Patentblatt 89/14**

(84) Benannte Vertragsstaaten :
**AT BE CH DE ES FR GB IT LI LU NL SE**

(56) Entgegenhaltungen :
**DE--A-- 3 343 102
DE--A-- 3 426 157
DE--C-- 2 941 008
GB--A-- 2 119 054**

(73) Patentinhaber : **Firma Connec AG Systembau-Technik**
**Baarerstrasse 75**
**CH-6300 Zug (CH)**

(72) Erfinder : **Swoboda, Helmut**
**Seemattweg 28**
**CH-4456 Tenniken (CH)**

(74) Vertreter : **Schmitt, Hans, Dipl.-Ing. et al**
**Patentanwälte Dipl.-Ing H. Schmitt Dipl.-Ing. W. Maucher Dreikönigstrasse 13**
**D-7800 Freiburg (DE)**

## Beschreibung

Die Erfindung betrifft eine Befestigungsvorrichtung mit einem Klemmverschluß zum lösbaren Angreifen an Hinterschneidungen aufweisenden Profilen od. dgl., wobei die Vorrichtung wenigstens zwei Haltestücke aufweist, von denen zumindest eines im Befestigungsbereich als Haken ausgebildet ist und die in Richtung der Hakenöffnung gegen eine Rückstellkraft relativ voneinander weg verschwenkbar gelagert sind, wobei diese Haltestücke eine Abstützung sowie eine sie in verschwenkter Position haltende Arretierung besitzen, wobei ferner ein Betätigungselement für die Relativbewegung der beiden Haltestücke vorgesehen ist, welches um eine in Schwenkrichtung der Haltestücke orientierte Achse drehbar ist, wobei wenigstens eine Feder für die Lösebewegung der Haltestücke vorgesehen ist und als Betätigungselement ein Exzenter dient, welcher um eine in Schwenkrichtung der Haltestücke orientierte Achse drehbar ist, wobei ferner Schrägflächen an den Haltestücken und/oder an mit diesen zusammenwirkenden Gegen-Gleitflächen eines Zwäng- oder Spreizteiles bei der Betätigung des Exzenters und der daraus resultierenden gleichzeitigen Verschiebung der Haltestücke in Form einer Rückzugbewegung zum Festlegen an der/den Hinterschneidungen deren Seitwärtsbewegung bewirken, wobei der Exzenter mit einem exzentrischen Kupplungsloch ausgebildet ist, in welches ein konzentrisch drehbarer Bolzen mit einem in Drehrichtung formschlüssig passenden Kupplungsbereich einsteckbar ist, der in Gebrauchsstellung mit seinem Betätigungsende die Lochung eines Gehäuses und/oder Profiles durchsetzt.

Eine derartige Befestigungsvorrichtung ist aus der DE-PS 29 41 008 bekannt. Dabei wirkt ein einziges Hakenstück und ein weiteres festliegendes Haltestück zusammen, wobei das Hakenstück mit Hilfe des Exzenters zurückgezogen und aufgrund einer Schrägfläche gleichzeitig von dem anderen Haltestück relativ zu diesem wegbewegt wird, so daß die beiden Haltestücke bei dem Befestigungsvorgang eine auseinandergerichtete Relativbewegung durchführen. Dabei greift in ungünstiger Weise der Exzenter unmittelbar an dem Hakenstück an, woraus sich ein erhöhter Verschleiß ergibt und Ungenauigkeiten der Bewegungen zu befürchten sind.

Ein weiteres Problem bei diesen vorbekannten Befestigungsvorrichtungen besteht in der Schwierigkeit ihrer Montage in der Stirnseite eines Gehäuses oder Profiles, welches im Querschnitt weitestgehend oder vollständig geschlossen ist. Der Betätigungsexzenter muß nämlich durch eine Öffnung der Wandung dieses Gehäuses erreichbar sein und ist bei den vorbekannten Lösungen auch innerhalb einer Lochung des Gehäuses drehbar gelagert. Es erhebt sich nun die Notwendigkeit, den Exzenter in der Profilwand oder Gehäusewand drehbar zu lagern oder unterzubringen, was bei den vorbeschriebenen Befestigungsvorrichtungen mit Hilfe einer Durchsteckmontage nach dem Einführen der übrigen Teile der Befestigungsvorrichtung in das Profil oder Gehäuse geschehen muß. Eine aus der Praxis bekannte Ausführungsform gemäß der DE-PS 29 41 008 sieht dabei vor, daß der Exzenter selbst und die Haltestücke in das Profil eingeführt und danach der den Exzenter durchsetzende Bolzen in diesen eingepreßt werden. Der Preßsitz ist dabei erforderlich, um den Bolzen zur Betätigung des Exzenters ohne zusätzliche Befestigungsmittel verankern zu können, so daß er auch im Laufe zahlreicher Betätigungen nicht gelöst werden kann. Dadurch ist aber auch ein Herauslösen dieser Befestigungsvorrichtung aus dem sie haltenden Hohlprofil ausgeschlossen.

In der DE-PS 29 41 008 selbst wird eine Möglichkeit zum Trennen der Verbindung beschrieben, wobei vorgesehen ist, daß der Bolzen eine umlaufende Rille hat, mit welcher er in ein Fenster im Schenkel einer Blattfeder eingesprengt werden muß. Die dann eventuell durchführbare Trennung muß durch einen Hammerschlag auf das Betätigungsende des Bolzens eingeleitet werden, was diesem Betätigungsteil selbstverständlich nicht zuträglich ist und darüber hinaus wegen der beengten Platzverhältnisse im Bereich dieses Betätigungsendes unter Umständen auch zu einer Beschädigung der Umgebung führen kann.

Es ist deshalb auch schon ein Vorschlag gemäß DE-OS 31 28 595 bekanntgeworden, bei welchem der Exzenter mit seinem Betätigungselement axial gegen die Kraft einer Feder verstellbar ist, so daß er in das Innere des Hohlprofiles verstellbar ist, um das Montieren und Auswechseln zu erleichtern. Dabei müssen der Exzenter und der ihn haltende Bolzen in axialer Richtung unverrückbar fest aufeinandersitzen oder einstückig verbunden sein. Ungewollte Einrückbewegungen an dem Exzenter können dabei unter Umständen die eigentliche Verankerung der Befestigungsvorrichtung an dem Gegenprofil gefährden.

In der DE-PS 22 39 370 ist in einem ersten Ausführungsbeispiel eine Befestigungsvorrichtung beschrieben, die der eingangs genannten Gattung bis auf das Merkmal entspricht, daß der Exzenter mit einem exzentrischen Kupplungsloch für einen in Drehrichtung formschlüssig in dieses Loch passenden Betätigungsbolzen ausgebildet ist. Dabei sind die beiden Haltestücke als Haken ausgebildet und die seitliche Relativbewegung der beiden Halte- bzw. Hakenstücke wird dadurch erzeugt, daß sich auch wirklich beide Haken bewegen. Dabei greift der Exzenter unmittelbar an diesen Haltestücken an, indem er Lochungen an den Haltestücken durchsetzt, so daß seine Verdrehung die erwähnte Rückzugbewegung der Haltestücke mit ihren Hakenöfnungen hinter die Hinterschneidungen des zu erfassenden Profiles bewirkt. Gleichzeitig erfolgt mit Hilfe eines an Schrägflächen der Haltestücke angreifenden Zwängteiles die erwünschte seitliche Auseinanderbewegung der Haken, die im Bereich des Exzenters zu einer entsprechenden Zusammenführung der Hakenteile im Bereich des Exzenters führen muß. Dadurch kann die gesamte Betätigung schwergängig und verschleißanfällig werden, so daß nach einer gewissen Zahl von Betätigungsvorgängen die gewünschte Präzision nicht mehr mit Sicherheit erreicht wird.

In einem zweiten Ausführungsbeispiel dieser DE-PS 22 39 370 ist eine Befestigungsvorrichtung beschrieben, die gattungsmäßig von der vorstehenden Befestigungsvorrichtung abweicht. Die Hakenstücke haben dabei an ihren den Haken abgewandten Enden Schrägflächen, gegen welche zum Auseinanderspreizen der Hakenstücke mit Hilfe des Exzenters ein Druckstück angedrückt wird, wodurch wegen der schrägen Stirnseiten der Hakenstücke diese auseinandergespreizt werden. Dabei sind also schwierige Hebelverhältnisse zu beachten und die aufeinanderliegenden Hakenstücke jeweils gegensinnig zu verschwenken, wobei hohe Reibkräfte zu überwinden sind. Diese Vorrichtung hat sich deshalb im Gegensatz zu der erstbeschriebenen Vorrichtung in der Praxis nicht bewährt. Wegen der Schwenklagerung der Haken können diese auch nicht gegen die Hinterschneidungen zurückgezogen werden, so daß die gewünschten Klemmkräfte nicht mit genügender Sicherheit erreicht und aufrechterhalten werden.

Aus der GB-A-21 19 054 ist schließlich eine Befestigungsvorrichtung abgewandelter Gattung bekannt, bei welcher zwei Exzenter wiederum unmittelbar an den hakenartigen Haltestücken angreifen. Zusätzlich ist ein weiterer gegensinniger Exzenter vorgesehen, mit welchem der Zwäng- bzw. Spreizteil gegensinnig zu den Halteteilen vorgeschoben werden kann, um die Spreizung zu beschleunigen und in Gebrauchsstellung besser zu sichern. Da dabei diese Exzenter jeweils unmittelbar an den von ihnen bewegten Teilen angreifen, besteht die Gefahr, daß die Verankerung an einem Profil unzulänglich ist oder gar nicht zustande kommt. Die von den Exzentern beaufschlagte Feder wird nämlich aufgrund des unmittelbaren Angriffes der Exzenter an diesen Teilen nicht nur in Längsrichtung, sondern auch quer dazu bewegt, also ähnlich wie ein Pleuel im Zusammenwirken mit einer Kurbelwelle verschwenkt. Dies wirkt sich in nachteiliger Weise auf die Haltehaken aus.

Der Erfindung liegt die Aufgabe zugrunde, bei einer Befestigungsvorrichtung der gattungsgemäßen Art die Vorteile einer gleichzeitigen Rückzugbewegung und Spreizbewegung der Haltestücke mit Hilfe eines Exzenters ohne zusätzliche quer dazu erfolgende Schwenkbewegungen beizubehalten, dabei aber den Verschleiß zwischen Exzenter und Haltestücken, daraus resultierende Schwergängigkeiten und Ungenauigkeiten der Bewegungen zu vermeiden. Dennoch soll die Montage und gegebenenfalls die Demontage der Befestigungsvorrichtung in einem im Querschnitt geschlossenen Gehäuse oder Profil einfach durchführbar sein, ohne daß für die Demontage Schlagwerkzeuge erforderlich sind.

Diese scheinbar widersprüchliche Aufgabe wird gemäß der Erfindung dadurch gelöst, daß die beim Bewegen in die Halteposition rückziehbaren Haltestücke von einem Druckstück beaufschlagt sind, welches eine Angriffsfläche für den Exzenter aufweist, und daß der Bolzen zum Einschieben der Vorrichtung in das Gehäuse oder Profil in axialer Richtung relativ zu dem Exzenter gegen eine Rückstellkraft verschieblich ist.

Die Verwendung des Druckstückes vermeidet die unmittelbare Einwirkung des Exzenters auf das Haltestück oder dessen Federbügel beim Zurückziehen, obwohl weiterhin die vorteilhafte Rückzugbewegung des Haltestückes mittels des Exzenters im Gegensatz zu der Druckbewegung beim zweiten Ausführungsbeispiel der DE-PS 22 39 370 beibehalten wird. Dadurch werden hohe spezifische Drücke an dem Haltestück und somit ein hoher örtlicher Verschleiß und auch eine Verformung des Federbügels bzw. des zu dem Haltestück gehörenden Teiles vermieden. Dabei wird dafür gesorgt, daß dennoch der eine Lochung des Gehäuses oder Profiles durchsetzende Bolzen des Exzenters verschieblich ist, ohne daß dabei der Exzenter aus der Angriffskurve des Druckstückes ausgerückt werden müßte, was bei denjenigen Exzentern erforderlich wäre, die beispielsweise gemäß DE-OS 31 28 595 eine Axialverstellung ermöglichen.

Somit kann der Exzenterbolzen zwar axial verstellt werden, ohne den Exzenter selbst seitlich aus seiner Wirkposition, d. h. aus dem Bereich des Druckstückes zu verschieben. Durch die scheinbar unabhängigen Maßnahmen, den Exzenter an einem Druckstück angreifen zu lassen und den Drehbolzen für den Exzenter nicht mit Preßsitz oder einstückig mit dem Exzenter zu verbinden, sondern in scheinbar widersinniger Weise eine Verschieblichkeit vorzusehen, ergibt also insgesamt die Möglichkeit, die Haltestücke schonend und dennoch wirkungsvoll ihren Mehrfachbewegungen zu unterziehen, ohne daß die Antriebskräfte in ungünstiger Weise zu hohen spezifischen Drücken, hoher Reibung, Verformungen und damit zu Ungenauigkeiten führen können. Entsprechend lange kann die erfindungsgemäße Befestigungsvorrichtung ihrer Aufgabe bestmöglich und unter ggfs. sogar erhöhter Krafteinwirkung gegenüber herkömmlichen derartigen Vorrichtungen erfüllen.

Aufgrund der Verschieblichkeit ist bei der Axialverstellung des Bolzens auch bei einer Demontage kein Schlagwerkzeug erforderlich. Die Rückstellkraft hat dabei den Vorteil, die jeweilige Verschiebung des Bolzens wieder selbsttätig rückgängig zu machen, so daß der Bolzen bei der Montage der Befestigungsvorrichtung selbsttätig in die für ihn vorgesehene Lochung einrasten kann, wenn die Befestigungsvorrichtung in das Gehäuse oder Profil eingeschoben wird.

Die erfindungsgemäße Ausbildung der gattungsgemäßen Befestigungsvorrichtung erlaubt eine große Anzahl zweckmäßiger und vorteilhafter Ausgestaltungen und daneben eine weitere Ausführungsform, die für sich wiederum gegenüber dem Stand der Technik eigene schutzwürdige Bedeutung hat.

Zunächst ist es vorteilhaft, wenn der Exzenter als Scheibe ausgebildet ist. Es genügt eine relativ schmale Scheibe als Exzenter, weil deren Kraft über das Druckstück gleichmäßig und günstig verteilt werden kann.

Ausgestaltungen der Befestigungsvorrichtung hinsichtlich der Anordnung des Bolzens und des Druckstückes sowie des Gehäuses sind Gegenstand der Ansprüche 3 und 4. Dabei ergibt sich eine sehr einfache Konstruktion, wenn in bekannter Weise beide Haltestücke als Hakenstücke in einem Stück mit dem Federbügel verbunden sind, was Herstellung und Montage erleichtert.

Besonders zweckmäßig ist es vor allem bei zwei voneinanderweg bewegbaren und gleichzeitig rückziehbaren Hakenstücken, wenn das Spreizstück oder Spreizteil auf dem Kupplungsbereich des Bolzens gelagert ist und beidseitig dieses Spreizteiles je eine Exzenterscheibe ebenfalls auf dem Kupplungsbereich des Bolzens sitzt und je ein Druckstück an einer Angriffskurve beaufschlagt. Dadurch können die Exzenter-Kräfte über die beiden Exzenterscheiben und die beiden Druckstücke noch besser und symmetrisch auf die beiden Hakenstücke übertragen werden. Dabei ist es wiederum vorteilhaft, daß der Bolzen die Exzenterscheiben in einem Schiebesitz durchsetzt, weil so die Montage der nebeneinander befindlichen Teile auf dem Bolzen vereinfacht wird und die Anordnung des Spreizteiles zwischen den beiden Exzenterscheiben sehr einfach realisiert werden kann.

Weitere Ausgestaltungen der Erfindung hinsichtlich der Angriffskurve der Druckstücke sind Gegenstand der Ansprüche 6 bis 8. Ausgestaltungen bezüglich der Lagerung des Bolzens sowohl für seine Verdrehbarkeit als auch für seine axiale Verschieblichkeit sind Gegenstand der Ansprüche 9 bis 14. Von erheblicher Bedeutung sind in diesem Zusammenhang die in Anspruch 10 erwähnten Abflachungen, die sich bei der Ausführungsform nach Anspruch 11 von selbst mehrfach ergeben und die die Axialverschiebung des Bolzens bei bestimmten Drehstellungen sperrt und bei anderen Drehstellungen erlaubt, wenn nämlich die Merkmale von Anspruch 13 zusätzlich erfüllt sind. Dadurch kann erreicht werden, daß eine Verschiebbarkeit des Bolzens dann verhindert ist, wenn er eine Drehstellung einnimmt, bei welcher die Befestigungsvorrichtung an dem Gegenprofil angreift und sich in Gebrauchsstellung, also in Klemmschluß befindet. Diese Ausgestaltung, die in bestimmten Drehbereichen zwar die axiale Verschiebung des Bolzens aus den eingangs schon erwähnten Gründen ermöglicht, in Verschluß- oder Klemmstellung diese Verschieblichkeit aber sperrt, ist ganz besonders vorteilhaft und hat deshalb schutzwürdige Bedeutung.

Eine weitere zweckmäßige Ausgestaltung der Erfindung kann darin bestehen, daß das Zwängoder Spreizelement einen seitlichen Vorsprung hat, gegen den wenigstens eines der Druckstücke mit seiner seinem Betätigungsende abgewandten Seite in Ausgangsstellung vor Durchführung der Befestigungsbewegung — also in Lösebewegung der gesamten Befestigungsvorrichtung — anliegt, so daß eine Verdrehung des Exzenters in der der Befestigungsrichtung entgegengesetzten Richtung gesperrt ist. Dadurch werden Fehlbedienungen von vornherein ausgeschlossen.

Eine weitere Ausgestaltung der erfindungsgemäßen Befestigungsvorrichtung kann in teilweise bekannter Weise darin bestehen, daß das die Querbewegung der Haltestücke bewirkende Zwängteil oder Spreizteil seinerseits von einem Exzenter gegenläufig zu den Druckstücken verschiebbar ist, wobei die neue Ausgestaltung der Erfindung in diesem Zusammenhang darin bestehen kann, daß zwischen den Exzenterscheiben für die Druckstücke die weitere Exzenterscheibe formschlüssig mit Schiebesitz auf dem Kupplungsbereich des Bolzens angeordnet ist, die an einer Angriffskurve oder Lochung des Zwängteiles angreift. Somit bleibt die leichte Montierbarkeit durch eine Durchsteckmontage auch bei einer solchen Befestigungsvorrichtung mit gegenläufig zu den Halteteilen verstellbarem Zwängteil erhalten. Dabei können auch sämtliche Exzenterscheiben einstückig verbunden sein.

Besonders vorteilhaft ist es, wenn die Exzentrizität des Exzenters für den Zwängteil so groß ist, daß dieser bis nahe an oder in den Bereich der Öffnung des Hinterschneidungen aufweisenden Profiles verschiebbar ist. Um so ausgeschlossener ist irgend eine Lösebewegung an den voneinander wegbewegten Halte- oder Hakenstücken, da ihr Zwischenraum dann praktisch völlig ausgefüllt ist, so daß in Querrichtung an der Nut des die Hinterschneidungen aufweisenden Profiles praktisch ein kompakter Riegel entsteht.

In diesem Zusammenhang ist eine weitere Ausgestaltung von erheblicher Bedeutung möglich, die eine Anpassung an größere Toleranzen oder gar Maßunterschiede der Weite der Einstecköffnung des Profiles ermöglicht. Diese Ausgestaltung kann darin bestehen, daß das Zwängteil mehrere gegeneinander etwas versetzte Schenkel oder Bereiche aufweist und in seiner seitlichen Abmessung oder Dicke selbsttätig federnd verstellbar ist, wobei die Federkraft der Zwängteil-Schenkel größer als die Spreizkraft an den Halteteilen ist. Dadurch ergibt sich beim Eintritt in die Öffnung des Profiles eine Selbstzentrierung und somit in jedem Falle dann eine spielfreie Anordnung im Umfang der Federwege der Schenkel oder Bereiche des Zwängteiles. Zunächst kann nämlich das Zwängteil die Haltestücke in üblicher Weise auseinanderbewegen, wird dann aber selbst entgegen dem Federweg seiner Teile oder Bereiche in seiner Dicke soweit reduziert, wie es der Abstand der Halteteile im Bereich der Öffnung des Profiles noch erforderlich macht.

Ausgestaltungen des Zwängteiles mit relativ zueinander federnd zusammendrückbaren Bereichen sind Gegenstand der Ansprüche 20 bis 22.

Weitere Ausbildungsmöglichkeiten der Exzenterscheibe als Nockenkurvenscheibe, der dabei daran angepassten Druckstücke, einer Ausgestaltung zur zeitversetzten Verschiebung der Druckstücke einerseits und des Zwängteiles andererseits sind Gegenstand der Ansprüche 23 bis 27.

Durch die erwähnte zeitversetzte Bewegung der Druckstücke und des Zwängteiles wird die Schließbewegung noch einfacher und leichtgängiger, weil die über den Exzenter zu übertragenden Kräfte nicht gleichzeitig auftreten und aufgebracht werden müssen. Der Benutzer verschiebt vielmehr zunächst das Zwängteil zumindest ein Stück weit, so daß diese sich bereits in Bewegung befinden, wenn dann die Druckstücke ebenfalls in Bewegung gesetzt und verschoben werden sollen. Dieser Ausgestaltung mit einer zeitverzögerten Verschiebung der Druckstücke kommt desahlb ebenfalls eine besondere schutzwürdige Bedeutung zu.

Konstruktive Einzelheiten bezüglich der Ausgestaltung des Gehäuses für die Befesitungsvorrichtung sind in den Ansprüchen 28 und 29 enthalten.

Bei den vorbeschriebenen Ausführungsformen wurde über die Öffnung oder Orientierung der Haken der Hakenstücke nichts ausgesagt. Bei einer Lösung mit einem zwischen ihnen befindlichen Zwängteil ist es jedoch analog dem Stand der Technik zweckmäßig, daß die Hakenstücke voneinander weggerichtete Haken haben und zum Verankern in einem etwa C-förmigen Profil zusätzlich zu ihrer Rückzugsbewegung voneinanderweg spreizbar sind.

Es ist jedoch auch eine Ausgestaltung der Erfindung möglich, bei welcher zwei mit ihren Hakenöffnungen einander zugewandte Hakenstücke als Haltestücke vorgesehen sind, die in Ausgangslage gespreizt sind und durch an äußeren Schrägen außen angreifende Zwängelemente beim Zurückziehen der Hakenstücke zangenförmig oder pinzettenartig einander genähert werden und die Stege eines T-Profiles od. dgl. umschließen. In diesem Falle können in dem U-förmigen Gehäuse an dessen Seitenwänden zwei Zwängstücke angeordnet sein, die die nach außen gerichteten Schrägen der zueinander gewandten Hakenstücke beaufschlagen und zwischen diesen Zwängstücken kann der die Hakenstücke insbesondere einstückig tragende Federbügel verlaufen, in dessen Innerem wiederum ein — vorzugsweise einziges — Druckstück mit einer Exzenterscheibe angeordnet ist. Gegenüber den bisher bekannten Lösungen, bei denen die Haken jeweils voneinanderweg bzw. von einem weiteren Haltestück weg geöffnet und wegspreizbar sind, stellt diese Ausgestaltung eine nicht naheliegende Lösung dar, weil sie nun auch ein Umschließen flanschartiger Vorsprünge oder Stege und nicht nur das Befestigen an einem Profil mit einer Nut ermöglicht. Somit kommt dieser speziellen Ausgestaltung der Erfindung ebenfalls schutzwürdige Bedeutung zu.

Selbstverständlich lassen sich auch bei dieser Ausführungsform einige der vorbeschriebenen Merkmale und Maßnahmen in Anpassung an die Abwandlung mit entsprechenden Vorteilen anwenden. So können die beiden die Außenseite der Hakenstücke beaufschlagenden Zwängteile ebenfalls von an Öffnungen im Bereich des Bolzens angreifenden Exzenterscheiben beaufschlagt und entgegengesetzt zu dem Druckstück verschiebbar sein. Dadurch kann die Schließbewegung der einander zugewandten Hakenstücke verstärkt und beschleunigt werden. Ferner sind die Hakenstücke dann in Schließstellung näher an ihren Halteöffnungen nach außen abgestützt, so daß eine größere Schließkraft und somit auch ein größerer Widerstand gegen ein ungewolltes oder unbefugten Öffnen erreicht wird.

Eine weitere Befestigungsvorrichtung der gattungsgemäßen Art kann zur Lösung der eingangs gestellten Aufgabe bei gleichzeitig bestmöglicher Ausfüllung der Querschnittsweite der Öffnung des Profiles, an welchem die Befestigungsvorrichtung angreifen soll, dadurch gekennzeichnet sein, daß sie ein aus ihrem Gehäuse od. dgl. stirnseitig vorstehendes. in die Öffnung des Gegenprofiles passendes Riegelelement od. dgl. aufweist, in dessen innerem Umriß relativ zueinander nach außen über die seitlichen Oberflächen des Riegels spreizbare Halte-oder Hakenstücke angeordnet sind. Somit kann diese Befestigungsvorrichtung mit dem vorspringenden « Riegel » also einem sehr biegesteifen und stabilen Teil, in die Öffnung des Gegenprofiles eingesteckt und dann betätigt werden, wodurch plötzlich aus den Riegeloberflächen entsprechende Verankerungsteile austreten, die wie bei der gattungsgemäßen Befestigungsvorrichtung an Hinterschneidungen des Profiles angreifen und somit die gewünschte Verklemmung erzeugen.

Ausgestaltungen dieser speziellen Befestigungsvorrichtung mit Riegelelement sind Gegenstand der Ansprüche 34 bis 42. Insbesondere sind in diesen Ansprüchen die Merkmale angegeben, wie die Halte- oder Hakenstücke gattungsgemäß mittels Exzenter in ihre vorstehende Verriegelungsposition gelangen. Dabei ergibt sich in diesen Ansprüchen wiederum auch eine Übereinstimmung zu den Merkmalen einzelner oder mehrerer der vorbeschriebenen und vorstehend abgehandelten Ansprüche, so daß insgesamt auch diese Befestigungsvorrichtung das weiter oben beschriebene Erfindungsprinzip erfüllt, außerdem aber eigene schutzwürdige Bedeutung hat gemäß Anspruch 33.

Es sei noch erwähnt, daß der die Exzenterscheibe oder die Exzenterscheiben mit Schiebesitz aber in Drehrichtung formschlüssig durchsetzende Bolzen mit beiden zylindrischen Ansätzen, die sich jeweils im Anschluß an die Profilierung befinden, jeweils in einer Ausnehmung des Gehäuses gelagert sein kann und das Gehäuse an dem der Betätigungsseite des Bolzens gegenüberliegenden Ende zwischen sich und dem Profil einen Abstand, insbesondere eine Einziehung oder Nut od. dgl. aufweisen kann, deren in Axialrichtung des Bolzens verlaufende Erstreckung mindestens dem Verschiebeweg des Bolzens gegen die Kraft einer Druckfeder entspricht.

Insgesamt ergeben sich mehrere Möglichkeiten einer Befestigungsvorrichtung der eingangs erwähnten Art, bei welcher der Krafteinsatz zur Betätigung vermindert und dennoch die Wirksamkeit und die Lebensdauer erheblich erhöht sind. Dies wird ohne nennenswerten konstruktiven Aufwand vor allem durch den Schiebesitz zwischen Betätigungsbolzen und Exzenter einerseits und den Angriff des oder der Exzenter an Druckstücken und ggfs. Zwängteilen äußerst einfach erreicht so daß die Exzenter auch bei einer axialen Verschiebung des Bolzens immer in ihrer Wirkposition bleiben können, aber nicht selbst unmittelbar die durch sie zu bewegenden Teile beaufschlagen und einer hohen spezifischen Druckbelastung mit entsprechendem Verschleiß und der Gefahr von Verformungen aussetzen müssen.

Nachstehend ist die Erfindung mit ihren ihr als wesentlich zugehörenden Einzelheiten in mehreren Ausführungsbeispielen noch näher beschrieben.

Es zeigt :

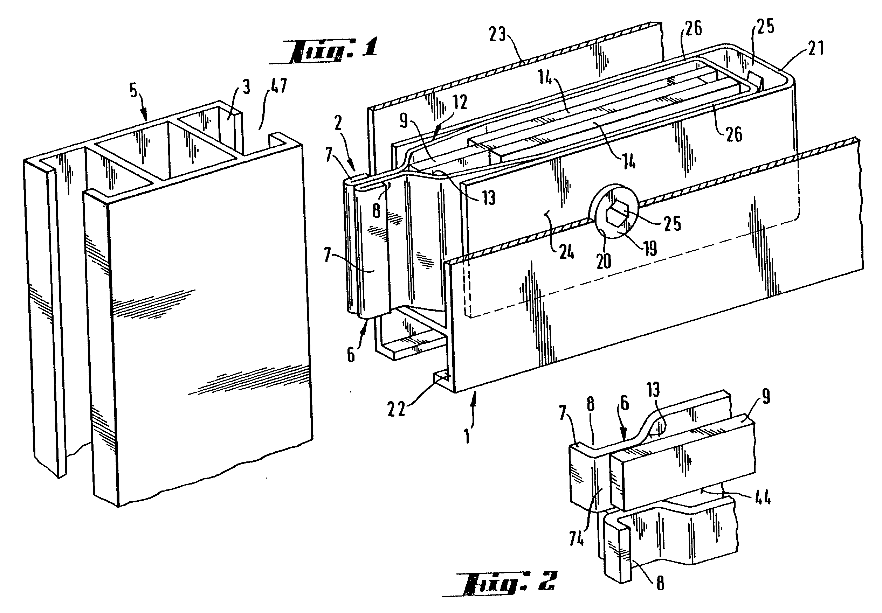

Fig. 1 bis 7 zwei erste Ausführungsbeispiele mit gleichzeitig voneinander wegbewegbaren und rückziehbaren Hakenstücken, wobei entweder zwei aneinanderliegende Haken oder zwei Sorten von in der Höhe gegeneinander versetzte, nach unterschiedlichen Seiten geöffnete Haken vorgesehen sind, dabei zeigt im einzelnen :

Fig. 1 in schaubildlicher und teilweise geöffneter Darstellung eine erfindungsgemäße Befestigungsvorrichtung in Ausgangsstellung vor dem Verbinden mit einem eine Nut mit Hinterschneidungen aufweisenden Profil,

Fig. 2 die abgewandelte Ausbildung der voneinander wegbewegbaren, in diesem Falle zusätzlich noch in ihrer Höhe versetzten Hakenstücken,

Fig. 3 einen Längsschnitt durch die Befestigungsvorrichtung gemäß Fig. 1 in Ausgangsstellung, d. h. bei aneinanderliegenden und noch nicht zurück in das Gehäuse gezogenen Hakenstücken,

Fig. 4 einen der Fig. 3 entsprechenden Längsschnitt nach dem Zurückziehen der Hakenstücke und dem dadurch gleichzeitig bewirkten Aufspreizen,

Fig. 5 einen Horizontalschnitt durch die Vorrichtung in der Anordnung nach Fig. 3, also in Lösestellung,

Fig. 6 einen Horizontalschnitt durch die Vorrichtung in Schließstellung gemäß Fig. 4 und

Fig. 7 die Schließstellung der Haken gem. Fig.2.

Es zeigt ferner :

Fig. 8 einen Horizontalschnitt durch eine abgewandelte Ausführungsform, bei welcher nicht nur die Hakenstücke zurückziehbar und mit einem feststehenden Zwängteil aufspreizbar sind, sondern der Zwängteil seinerseits in den sich bildenden Zwischenraum zwischen die Hakenstücke entgegengesetzt zu deren Rückzugsbewegung vorschiebbar ist,

Fig. 9 einen Querschnitt durch den Kupplungsbereich des die Exzenterscheiben betätigenden Bolzens in Schließposition, in welcher der Bolzen bei einer Axialverschiebung gegen die Ränder des ihn lagernden Langloches mit seinem Kupplungsbereich anstößt,

Fig. 10 einen Horizontalschnitt durch die Lagerstelle des profilierten Bolzens gemäß Fig. 9,

Fig. 11 eine abgewandelte Ausführungsform einer Befestigungsvorrichtung, bei welcher analog der Ausführungsform nach Fig. 8 die Hakenstücke zurückziehbar und durch einen entgegengesetzt vorschiebbaren Zwängteil auseinander bewegbar sind,

Fig. 12 bis 14 einen Längsschnitt durch die Ausführungsform nach Fig. 11 in unterschiedlichen Positionen der als Nockenscheibe ausgebildeten Exzenterscheibe, die mittels Vorsprüngen eine zeitversetzte Bewegung des Zwängteiles bzw. Druckstücke bewirkt,

Fig. 15 eine Ausgestaltung der Erfindung, bei welcher ein die Hakenstücke und deren Betätigung umschließendes Gehäuse von einem etwa U-förmigen Teil gebildet ist, dessen U-Schenkel horizontale Abkantungen zum oberen und unteren Abschluß des Gehäuses haben,

Fig. 16 eine gegenüber Fig. 15 dahingehend abgewandelte Ausführungsform, daß der obere und untere Abschluß des Gehäuses jeweils von Abkantungen der einander gegenüberliegenden Ränder des U-förmigen Gehäuses gebildet ist,

Fig. 17 eine Ausführungsform, bei welcher der zwischen den Hakenstücken befindliche Zwängteil durch zwei horizontale Schlitze zumindest in seinem vorderen Endbereich unterteilt ist, wobei diese vorderen Enden der einzelnen Bereiche des Zwängteiles relativ zueinander seitlich verformt sind und eine federnd nachgiebige größere Gesamtdicke des Zwängteiles gegenüber seiner Querschnittsdicke bewirken,

Fig. 18 eine abgewandelte Ausführungsform, bei welcher der Zwängteil in seinem vorderen Bereich durch drei parallel zu seinen Seitenflächen liegende Schlitze od. dgl. unterteilt ist, wobei jeweils äußere Platten des Zwängteiles ballig und federnd aufgewölbt sind und beim Eintritt in den Zwischenraum zwischen den aufgespreizten Hakenstücken an dem Gegenprofil zusammendrückbar sind,

Fig. 19 einen Horizontalschnitt durch die Ausführungsform nach Fig. 18 mit in Schließstellung befindlichem Zwängteil, dessen drei Einzelplatten gegen ihre Federkraft zu, sammengedrückt sind,

Fig. 20 bis 27 eine Ausführungsform, bei welcher ein Riegelelement mit aus dessen Seitenflächen vorspreizbaren Hakenstücken od. dgl. vorgesehen ist ; dabei zeigt im einzelnen :

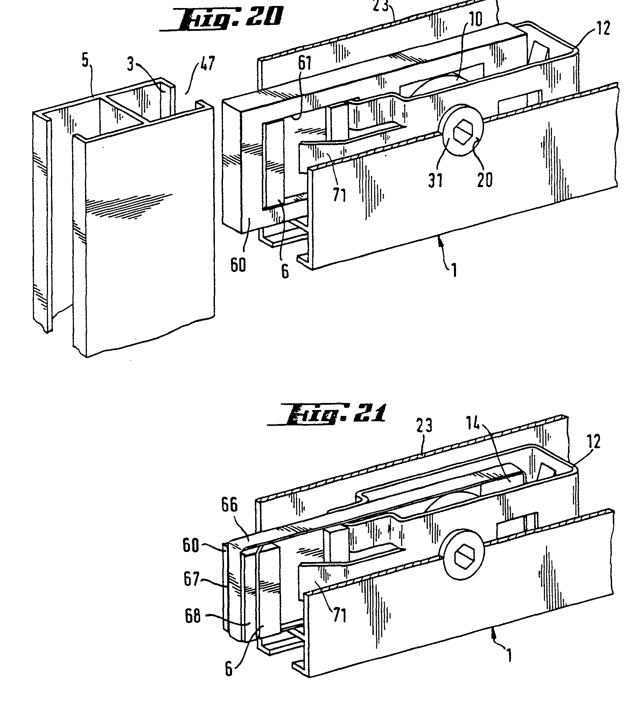

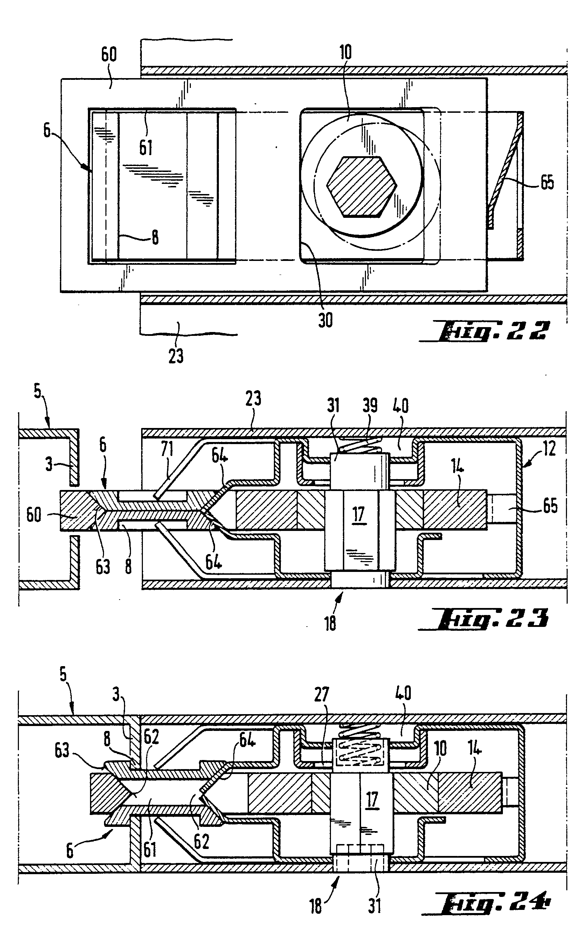

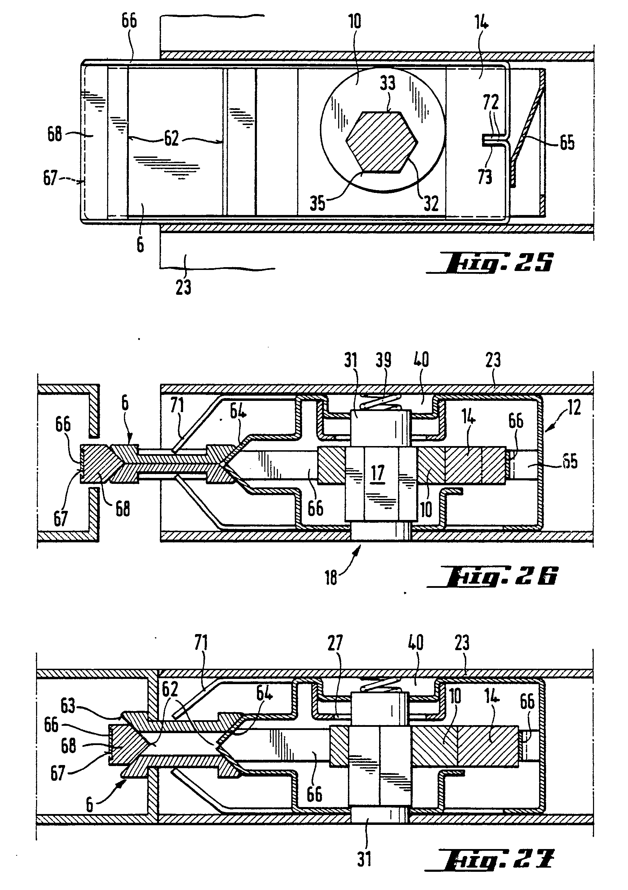

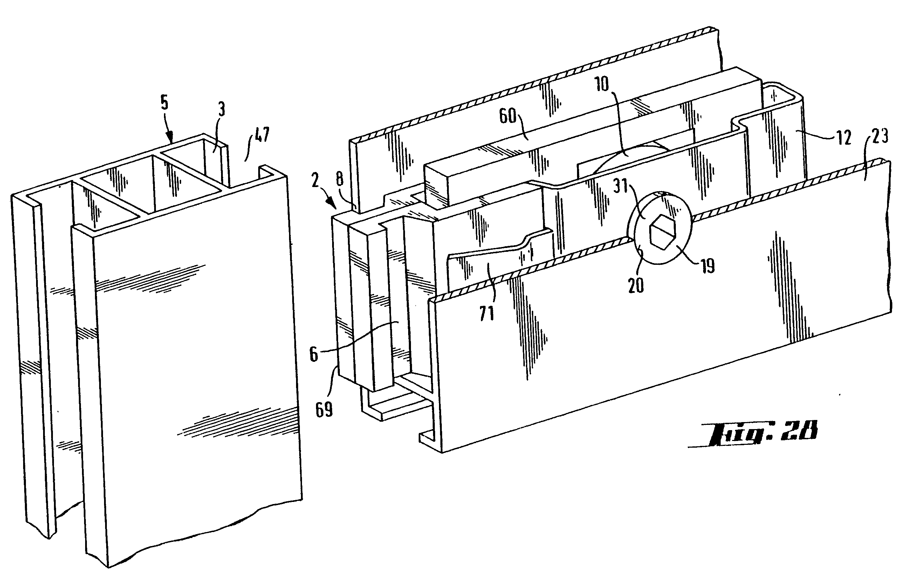

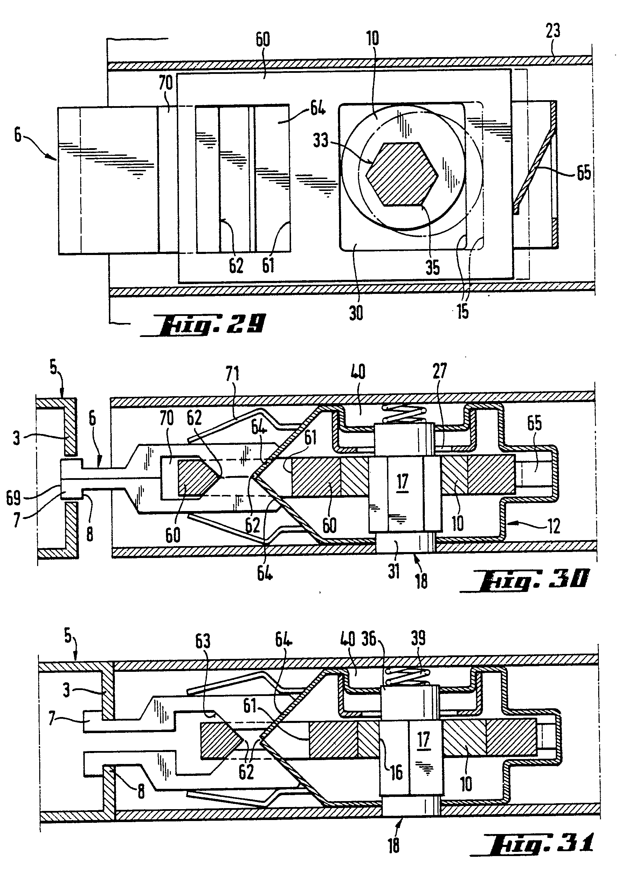

Fig. 20 in schaubildlicher und teilweise aufgeschnittener Darstellung eine Befestigungsvorrichtung mit einem einen starken Rahmen aufweisenden Riegelelement, aus dessen Umriß gegen die Kraft einer bügelartigen Feder Hakenstücke durch die Verdrehung eines Exzenters und die Betätigung eines Druckstückes austreten,

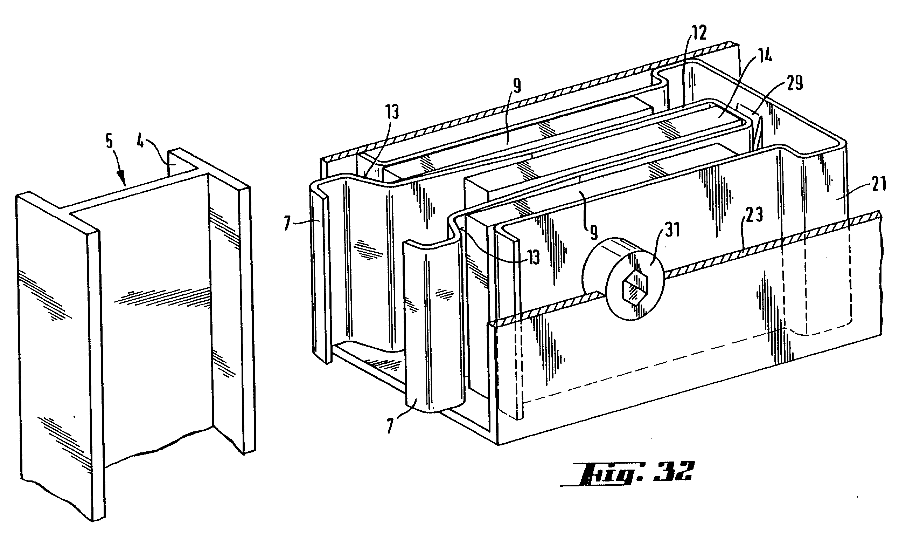

Fig. 21 eine der Fig. 20 weitestgehend entsprechende Darstellung, wobei die Ober- und die Unterseite des Riegelelementes durch ein auch an den Stirnseiten umlaufendes Federband gebildet sind, um die Bauhöhe zu verringern,

Fig. 22 einen Längsschnitt durch eine Befestigungsvorrichtung gemäß Fig. 20 in Ausgangsstellung,

Fig. 23 einen Horizontalschnitt durch eine Befestigungsvorrichtung gemäß den Figuren 20 und 22 in Ausgangsstellung,

Fig. 24 einen der Fig. 23 entsprechenden Horizontalschnitt, wobei sich die Befestigungsvorrichtung gemäß Fig. 20 in Befestigungsposition befindet und durch Verdrehen des Exzenters zwei an der Innenöffnung des Riegelelementes einander zugewandte Schneiden in ihrem Abstand verringert sind, so daß die von innen beaufschlagten Halte- oder Hakenelemente gegen die Kraft der sie zunächst zusammendrückenden Feder nach außen verschoben sind,

Fig. 25 eine der Fig. 22 entsprechende Darstellung der Befestigungsvorrichtung nach Fig. 21,

Fig. 26 eine der Fig. 23 entsprechende Darstellung der Befestigungsvorrichtung nach Fig. 21 und

Fig. 27 eine der Fig. 24 entsprechende Darstellung des Befestigungselementes nach Fig. 21.

Fig. 28 bis 31 eine abgewandelte Ausführungsform einer Befestigungsvorrichtung mit einem Riegelelement, bei welcher eines der Zwängteile zwischen zwei Hälften des Riegelelementes angeordnet ist und in Schließstellung die beiden Hälften des Riegelelementes aufgespreizt sind,

Fig. 32 bis 36 eine wiederum abgewandelte Ausführungsform, bei welcher eine Befestigungsvorrichtung mit zwei relativ zueinander bewegbaren und gleichzeitig rückziehbaren Hakenstücken vorgesehen ist, deren Hakenöffnungen einander zugewandt sind ; dabei zeigt im einzelnen :

Fig. 32 in schaubildlicher und teilweise aufgeschnittener Darstellung eine Befestigungsvorrichtung, bei welcher die beiden einander zugewandten Hakenstücke in Öffnungsposition sind, bevor sie zwei flanschartige Stege eines doppel-T-förmigen Profiles erfassen,

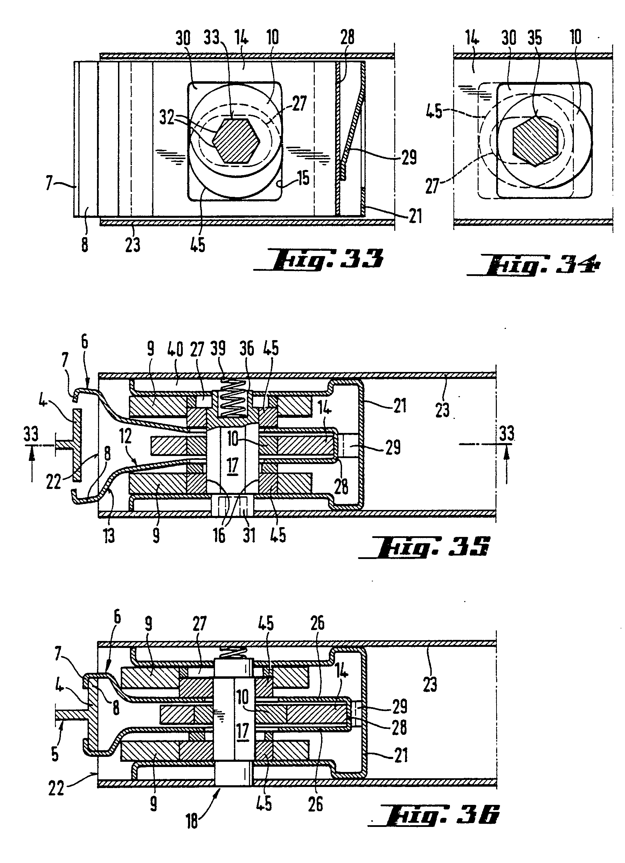

Fig. 33 einen Längsschnitt durch die Vorrichtung gemäß Fig. 32 .in Offenstellung,

Fig. 34 einen Längsschnitt durch den Bereich des Betätigungsexzenters und des diesen durchsetzenden Bolzens in Schließstellung, in welcher der profilierte Bolzen in axialer Richtung festgelegt ist.

Fig. 35 einen Horizontalschnitt durch die Befestigungsvorrichtung gemäß Fig. 32 in Offenstellung und

Fig. 36 einen Horizontalschnitt durch die Befestigungsvorrichtung nach Fig. 32 in Schließstellung, wobei an den in diesem Falle außenliegenden Zwängteilen ebenfalls Exzenterscheiben angreifen und diese Zwängteile gegenläufig zu dem die Hakenstücke zurückziehenden Druckstück verschiebbar sind.

Bei den nachfolgend beschriebenen verschiedenen Ausführungsbeispielen werden übereinstimmende Teile selbst bei abgewandelter Formgebung jeweils mit demselben Bezugszeichen versehen.

Eine im ganzen mit 1 bezeichnete Befestigungsvorrichtung mit einem mit 2 bezeichneten Klemmverschluß dient zum lösbaren Angreifen an Hinterschneidungen 3 (z. B. Fig. 1) oder Stegen 4 (z. B. Fig. 32) aufweisenden Profilen 5. Statt der in den verschiedenen Ausführungsbeispielen dargestellten unterschiedlichen Profile 5 könnte aber auch ein Angreifen an sonstigen mit einer Nut oder mit Flanschen versehenen Stange oder Leiste vorgesehen sein.

Die Vorrichtung 1 weist dazu wenigstens zwei Haltestücke 6 auf, von denen zumindest eines im Befestigungsbereich als Haken 7 ausgebildet sein kann, wobei in den dargestellten Ausführungsbeispielen praktisch alle Haltestücke 6 eine Hakenform oder wenigstens eine hakenähnliche Form haben. Diese Haltestücke sind in Richtung der Hakenöffnung 8 gegen eine Rückstellkraft relativ voneinanderweg verschwenkbar gelagert, wobei im Ausführungsbeispiel beide Haltestücke 6 eine entsprechende Schwenkbewegung durchführen, aber auch Lösungen möglich wären, bei denen ein Haltestück 6 stehen bleibt und nur das andere in der erwähnten Weise verschwenkt wird. Die Haltestücke 6 haben eine sie in verschwenkter Position haltende, noch näher zu beschreibende Arretierung und Abstützung in Form eines Spreizoder Zwängteiles 9, wobei ein im ganzen mit 10 bezeichnetes, als Exzenter ausgebildetes Betätigungselement für die Relativbewegung der beiden Haltestücke 6 vorgesehen ist, welches um eine in Schwenkrichtung der Haltestücke 6 orientierte Achse 11 drehbar ist. Dabei ist eine Feder 12, die in allen Ausführungsbeispielen als Federbügel 12 ausgestaltet ist, für die Lösebewegung der Haltestücke 6 vorgesehen. Der als Betätigungselement dienende Exzenter 10 ist um die in Schwenkrichtung der Haltestücke 6 orientierte Achse drehbar, wobei Schrägflächen 13 an den Haltestücken 6 und/oder an mit diesen zusammenwirkenden Gegen-Gleitflächen des Zwäng- oder Spreizteiles 9 bei der Betätigung des Exzenters 10 und der daraus resultierenden gleichzeitigen Verschiebung der Haltestücke in Form einer Rückzugbewegung zum Festlegen an den Hinterschneidungen 3 oder den Stegen 4 deren Seitwärtsbewegung bewirken.

Die Verdrehung des Exzenters 10 bewirkt als bei allen Ausführungsbeispielen einerseits eine gewisse Rückzugbewegung der Haltestücke 6 bzw. der Haken 7, wodurch diese über die erwähnten Schrägflächen 13 gleichzeitig voneinanderweg bewegt, also aufgespreizt werden.

Lediglich beim Ausführungsbeispiel ab Figuren 32 ist die Rückzugsbewegung über gegenläufig wirkende Schrägen und außen liegende Schwenkteile 9 in eine Bewegung der Haken 7 aufeinanderzu umgesetzt, um die Stege oder Flansche 4 von außen her zangenartig zu umgreifen. Diese kombinierte Rückzug- und Seitwärts-Bewegung der Haltestücke ergibt eine sichere Befestigung mit einer hohen Klemmkraft an dem jeweiligen Profil.

Bei allen Ausführungsbeispielen ist nun in vorteilhafter und zweckmäßige Weise vorgesehen, daß der Exzenter 10 nicht unmittelbar an den rückziehbaren Haltestücken angreift, so daß dieses beim Bewegen in die Halteposition mittels des Exzenters 10 zurückziehbare Haltestück 6 von einem Druckstück 14 beaufschlagt ist, welches eine Angriffskurve 15 — die in noch zu beschreibender Weise unterschiedlich gestaltet sein kann — für den Exzenter 10 aufweist, und daß der an dieser Angriffskurve 15 des Druckstückes 14 angreifende Exzenter 10 mit gegenüber der Angriffskurve 15 exzentrisch versetztem Kupplungsloch 16 ausgebildet ist, welches Kupplungsloch 16 mit Schiebesitz formschlüssig auf einem Kupplungsbereich 17 eines konzentrischen drehbaren Bolzens 18 paßt. Somit wird vermieden, daß ein an seiner Außenkontur in aller Regel bogenförmiger Exzenter unmittelbar an den Haltestücken unter hohem spezifischen Druck angreift und zu Verformungen und vorzeitigem Verschleiß und somit unexakten Schließbewegungen führt.

Der Exzenter 10 ist dabei als Scheibe ausgebildet, die im folgenden auch Exzenterscheibe 10 genannt wird und deren Kupplungsloch 16 der Bolzen 18 in Drehrichtung formschlüssig durchsetzt. Obwohl also der Exzenter bzw. die Exzenterscheibe 10 an einem Druckstück angreift, kann der Bolzen 18 axial verschoben werden, ohne daß die Exzenterscheibe 10 aus dem Bereich dieses Druckstückes und vor allem von deren Angriffskurve 15 gerät.

Man erkennt in verschiedenen Figuren, beispielsweise Fig. 1, 15-19, 32, aber auch weiteren Figuren, daß der Bolzen 18 in Gebrauchsstellung mit seinem Betätigungsende 19 eine Lochung 20 eines Gehäuses 21 oder Profiles 23 durchsetzt, und man erkennt in den jeweils zugehörigen Horizontalschnitten beispielsweise gemäß Fig. 6, 23 oder 35, daß der Bolzen 18 zum Einschieben in dieses Gehäuse 21 oder Profil 23 von der Stirnseite 22 her in axialer Richtung relativ zu der Exzenterscheibe 10 gegen eine Rückstellkraft verschieblich ist, um im Bereich der Lochung 20 dann wieder vorspringen zu können, um in diese Lochung 20 einzugreifen.

In allen dargestellten Ausführungsbeispielen ist vorgesehen, daß die Haltestücke 6, der Bolzen 18, Exzenterscheibe 10 und Druckstück 14 in einem sie zumindest U-förmig umschließenden Gehäuse 21 angeordnet sind, welches in die lichte Öffnung der Stirnseite 22 eines Profiles 23 paßt, das mit dem quer verlaufenden, Hinterschneidungen 3 oder Stege 4 aufweisenden Profil 5 verbunden werden soll, und man erkennt ferner, daß der Betätigungsbolzen 18 mit seinem Angriffs- bzw. Betätigungsende 19 eine Wand 24 dieses Gehäuses 21 und auch des Profiles 23 durchsetzt und in der Profillochung mit der Profiloberfläche bündig abschließend gelagert ist. Das Angriffs- bzw. Betätigungsende 19 des Bolzens 18 erkennt man dabei an einer profilierten Innenausnehmung 25, an welcher in bekannter Weise zum Verdrehen mit einem Werkzeug angegriffen werden kann.

Wiederum in allen Ausführungsbeispielen ist vorgesehen, daß die Haltestücke 6 von dem schon erwähnten etwa U-förmigen Federbügel 12 in Offenstellung gehalten sind, dessen U-Schenkel 26 Langlöcher 27 für den Durchtritt des Betätigungsbolzens 18 und für die durch die Betätigung erforderliche Längsbewegung der Haltestücke 6 aufweisen und dessen U-Quersteg 28 an der Innenseite von dem Druckstück 14 beaufschlagt ist.

Das den U-förmigen Federbügel 12 umschließende Gehäuse 21 sützt eine gegen den U-Quersteg 28 gerichtete Feder 29 ab, die in den Ausführungsbeispielen einstückig mit dem Gehäuse 21 verbunden ist. Gegen deren Kraft ist der Federbügel 12 mit den Haltestücken 6 entgegen der Öffnungsrichtung des die Befestigungsvorrichtung 1 aufnehmenden Profiles 23 mit Hilfe des Exzenters 10 zurückziehbar. Um die dabei auftretenden Kräfte bestmöglich über den Federbügel 12 leiten zu können, ist dieser bevorzugt einstückig mit den Haltestücken 6, die im Ausführungsbeispiel als Haken ausgebildet sind, verbunden. Diese Halte- bzw. Hakenstücke 6 sind zum Festlegen an einem Profil 5 durch die Rückzugbewegung mittels des Exzenters 10 relativ zu dem Spreizstück 9 gleichzeitig aufspreizbar bzw. gemäß Fig. 32 schließbar. Die Ausführungsbeispiele sehen somit symmetrische Anordnungen und Bewegungen vor, was für eine gleichmäßige Kraftübertragung günstig ist.

Bei den Ausführungsbeispielen nach Fig. 1 bis 19 ist das Spreizstück oder Spreizteil 9 auf dem Kupplungsbereich 17 des Bolzens 18 gelagert und beidseitig dieses Spreizteiles 9 sitzt je eine Exzenterscheibe 10 ebenfalls auf dem Kupplungsbereich 17 des Bolzens 18, die jeweils ein Druckstück 14 an einer Angriffskurve 15 beaufschlagt. Bei dieser symmetrischen Anordnung mit voneinanderweg spreizbaren Haken 7 sind also beidseits des Spreizteiles 9 symmetrisch Druckstücke 14 angeordnet, die synchron miteinander über entsprechende Exzenterscheiben 10 bewegt werden, relativ zu denen aber erfindungsgemäß der Bolzen 18 axial verschiebbar ist.

In den Ausführungsbeispielen gemäß Fig. 1 bis 10, 15 bis 19 und auch 20, 22 bis 24 sowie 28 bis 36 erkennt man, daß als Angriffskurve 15 eine Lochung in den Druckstücken 14 vorgesehen ist, deren Ausdehnung in Verschieberichtung der Haltestücke 6 dem Durchmesser der jeweiligen Exzenterscheibe 10 entspricht.

Quer zur Verschieberichtung ist dabei die Ausdehnung der Angriffskurve 15 bzw. der diese bildenden Lochung 30 in den Druckstücken 14 größer als der Durchmesser der Exzenterscheibe 10 und zwar größer als die Summe des Durchmessers der Exzenterscheibe 10 und der Exzentrizität, damit die Exzenterscheibe in diesem Bereich ohne Verschiebebewegungen dennoch mit ihrer äußeren Kontur auf dem der Exzentrizität entsprechenden äußeren Hüllkreis um den Bolzen 18 verschwenkt werden zu können.

Im Gegensatz zu der erwähnten, etwa rechteckigen Lochung 30 könnte die Lochung in den Druckstücken 14 aber auch kreisrund sein und der Abmessung der Exzenterscheibe 10 entsprechen, wenn der obere und der untere Rand des Druckstückes 14 gegenüber dem es aufnehmenden Gehäuse 21 oder Profil 23 in Ausgangsstellung einen Abstand mindestens entsprechend der Exzentrizität der Exzenterscheibe 10 hätte.

In axialer Richtung hat der Bolzen 18 jeweils beidseits seines profilierten Kupplungsbereiches 17 im Querschnitt kreisrunde Ansätze 31 als Drehlager des Bolzens 18 und der Kupplungsbereich 17 weist eine die kreisrunden Bereiche 31 in seiner Abmessung überragende Profilierung 32 auf. Für den Formschluß zwischen Bolzen 18 und Kupplungsloch 16 des Exzenters 10 könnte der Bolzen 18 als Keilwelle ausgebildet oder mit einer oder mehreren Abflachungen versehen sein. In den Ausführungsbeispielen ist jedoch der Kupplungsbereich 17 des Bolzens 18 im Querschnitt mehrkantförmig und zwar sechskantförmig, könnte aber auch eine Zahnung aufweisen. Die Kupplungs- bzw. Exzenterscheibe 10 hat eine dieser Profilierung 32 entsprechende Innenöffnung als Kupplungsloch 16 mit Schiebesitz.

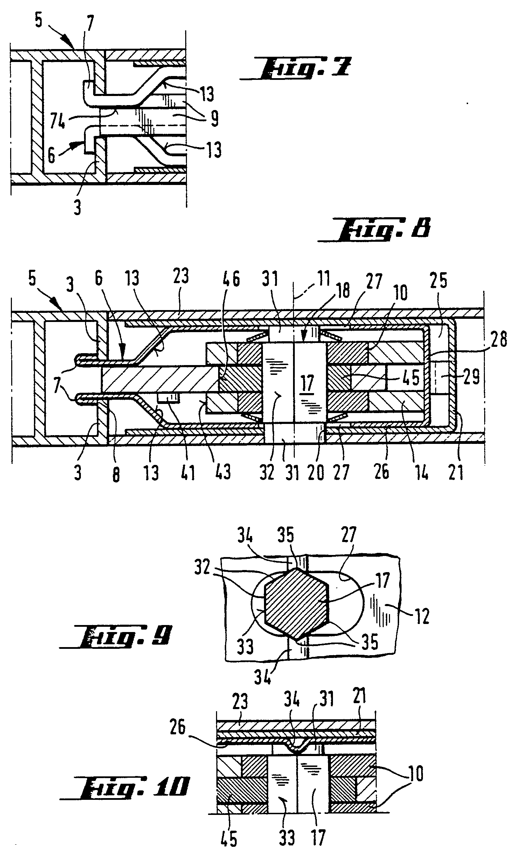

In den Figuren 9 und 10 bzw. 33 und 34 ist angedeutet, daß bei Schließ- bzw. Gebrauchsstellung der Befestigungsvorrichtung 1, wenn sie also an einem Profil 5 verklemmt ist, die axiale Verschiebbarkeit des Bolzens 18 relativ zur Exzenterscheibe 10 gesperrt ist, so daß eine ungewollte Auskupplung und Lösung der Befestigungsvorrichtung 1 in jedem Falle vermieden ist.

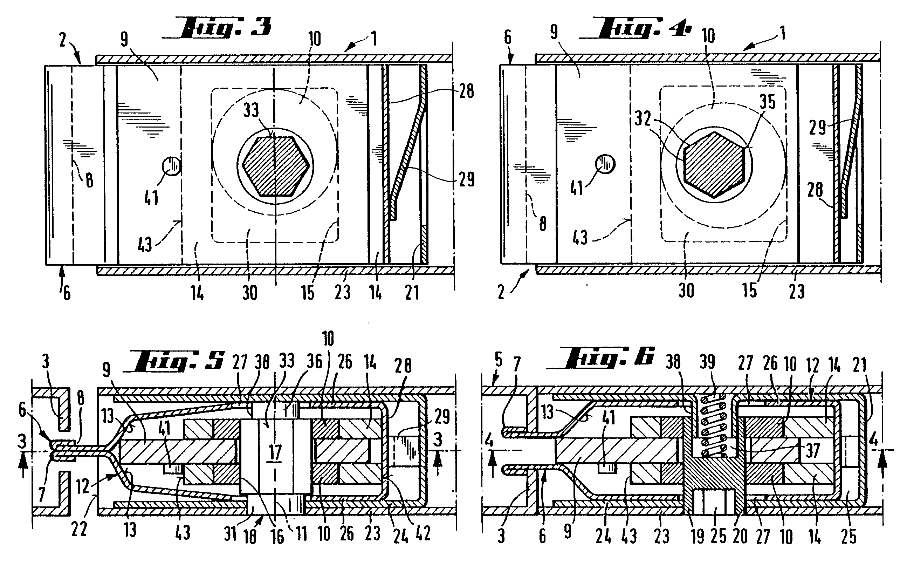

Dies wird dadurch erreicht, daß der im Querschnitt profilierte Kupplungsbereich 17 mit der Mitte seiner Flachseiten 33 jeweils bündig zu den Mantellinien der im Querschnitt kreisrunden Bolzenabschnitte 31 der Bolzenlagerung ist, daß das diese kreisrunden Abschnitte 31 aufnehmende Langloch 27 zumindest im Bereich des Kupplungsbereiches 17 als Anschlag 34 bis nahe an den Kupplungsbereich 17 herangeführt ist oder bis nahe zu dem Kupplungsbereich 17 vorspringt, so daß bei verdrehtem Bolzen in Schließstellung gemäß Fig. 9 und Fig. 34 ein nicht abgeflachter Bereich des Kupplungsbereiches 17 — im Ausführungsbeispiel bei dem sechskantförmigen Kupplungsbereich 17 eine Mehrkantspitze 35 — gegen die Innenseite des Randbereiches des Langloches 27 anschlägt. Den gegen den Kupplungsbereich 17 hin vorspringenden Anschlag 34 erkennt man dabei deutlich in Fig. 10, wobei er als nach innen gerichtete Sicke des Federbügels 12 ausgebildet ist. Die Darstellung der Fig. 10 verläuft dabei oberhalb des Bolzens, wo diese auch in Fig. 9 angedeutete Anschlagsicke 34 vorhanden ist, die im Bereich des Langloches 27 natürlich unterbrochen ist. Bei einem symmetrischen Mehrkant, also dem in Fig. 9 dargestellten Sechskant, ergibt sich sogar, daß die einander gegenüberliegenden Mehrkantspitzen 35 jeweils an diesem Anschlag 34 zur Anlage kommen, wenn der Bolzen 18 in eine Position beispielsweise auch gemäß Fig. 4 und 6 verdreht ist, wo die Haltestücke 6 klemmend an dem Profil 5 und dessen Hinterschneidungen 3 angreifen.

Aufgrund der Selbsthemmung des Exzenters und der relativ hohen Reibkräfte, die in dieser Position durch die Druckkräfte erzeugt werden, sitzt die gesamte Befestigungsvorrichtung 1 dann so fest, daß sie nur mit einem Werkzeug wieder gelöst werden kann. Dennoch werden die auftretenden erwähnten Kräfte sehr gut und großflächig auf den Federbügel 12 verteilt und auch die beim Verdrehen der Exzenterscheibe auftretenden Relativbewegungen werden dem Federbügel 12 ferngehalten, so daß dennoch die gesamte Vorrichtung praktisch keinen ungünstigen Verformungen und keinem die Lebensdauer verkürzenden Verschleiß unterliegt. Die weitestgehende Spielfreiheit bleibt also längstmöglich erhalten, so daß die Befestigungsvorrichtung 1 auch nach zahlreichen Lastwechseln ihre Funktion gut erfüllen kann.

Für die erwähnte axiale Verstellbarkeit des Betätigungsbolzens 18 ist gemäß Fig. 5 bis 8 beispielsweise vorgesehen, daß der Bolzen 18 an dem seinem Betätigungsende 19 entgegengesetzten Lagerende 36 eine Innenausnehmung 37 hat, mit welcher er auf einer nach innen geformten hülsenartigen Einbuchtung 38 des den Federbügel 12 umschließenden Gehäuses 21 drehbar gelagert ist, wobei die Tiefe der Bolzenausnehmung 37 zumindest um den vorgesehenen Verschiebeweg des Bolzens 18 größer als der Lagervorsprung 38 ist. Im Inneren der Bolzenausnehmung ist eine Rückstellfeder 39, im Ausführungsbeispiel eine Druckfeder angeordnet. Somit kann dieser Bolzen 18 der Darstellung der Fig. 6 in erwünschter Weise in seiner Axialrichtung und in Richtung seiner Achse 11 gegen die Rückstellkraft dieser Rückstellfeder 39 verstellt werden, um das schon weiter oben beschriebene Einbringen des Gehäuses 21 in das Profil 23 zu ermöglichen und an der Stelle der Lochung 20 von selbst in die Verriegelungsposition vorspringen zu können.

Diese Axialverstellung ist dann jeweils in einer solchen Position möglich, wie sie der Bolzen 18 und insbesondere sein Kupplungsbereich 17 in Fig. 3 und 5 einnimmt.

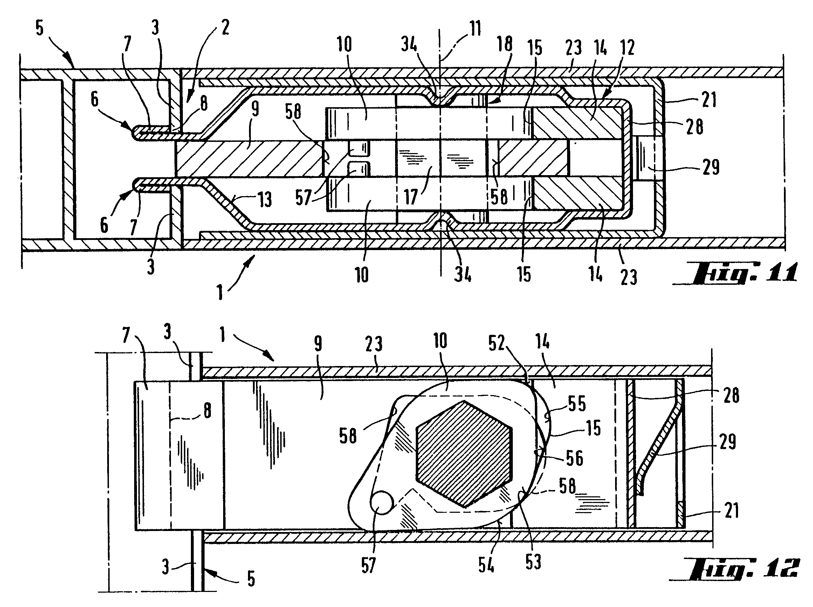

Es sei erwähnt, daß die Anschlagsicke 34 auch in Fig. 11 erkennbar ist und mit dem in den Figuren 12 bis 14 im Querschnitt erkennbaren Bolzen 18 in gleicher Weise zusammenwirken kann.

Diese Verschiebbarkeit des Bolzens in Lösestellung kann jedoch auch bei anders ausgebildeten axial gegen Federkraft verstellbaren Bolzen 18 ermöglicht werden, wie es beispielsweise in den Figuren 24 und 35 angedeutet ist. In diesen Fällen ist der Bolzen 18 mit beiden zylindrischen Ansätzen 31 jeweils in einer Ausnehmung des dabei als Gehäuse dienenden Federbügels 12 drehbar gelagert und dieses « Gehäuse » 12 hat an dem der Betätigungsseite 19 des Bolzens 18 gegenüberliegenden Ende zwischen sich und dem Profil 23 einen Abstand 40, der als Einziehung oder Nut od. dgl. ausgebildet sein kann und dessen in axialer Richtung des Bolzens 18 verlaufende Erstreckung mindestens dem Verschiebeweg des Bolzens 18 gegen die Kraft einer dort angeordneten Druckfeder 39 entspricht. Dabei ist wieder vorteilhaft, daß der Bolzen 18 und sein Kupplungsbereich 17 leicht relativ zu den Exzenterscheiben 10 verschoben werden kann, so daß diese bei dieser Prozedur ihre Lage nicht ändern müssen, sondern in gewünschter Weise mit den Druckstücken 14 in Eingriff bleiben, die die durch die Exzenter aufgebrachten Verstellkräfte schonend und weitestgehend verschleißfrei auf die Haltestücke 6 übertragen.

In den Figuren 3 bis 8 und 19 erkennt man daß das Zwäng- oder Spreizelement 9 oder wenigstens eines der entsprechenden Zwängteile 9 einen seitlichen Vorsprung 41 hat, gegen den wenigstens eines der Druckstücke 14 mit seiner seinem Betätigungsende 42 abgewandten Seite 43 in Ausgangsstellung vor Durchführung der Befestigungsbewegung anliegt, so daß eine Verdrehung des Exzenters 10 in der der Befestigungsrichtung entgegengesetzten Richtung und somit eine Fehlbedienung gesperrt ist.

Während die meisten Ausführungsbeispiele jeweils Haltestücke 6 mit über deren gesamter Höhe durchgehenden Haken 7 zeigen, ist in den Figuren 2 und 7 angedeutet, daß mehrere mit ihren Hakenöffnungen 8 entgegengesetzt gerichtete Hakenstücke 7 rechtwinklig zu ihrer Bewegungsrichtung übereinander angeordnet sein können und für jedes Hakenstück 7 ein dieses beaufschlagender Zwängteil 9 vorgesehen ist, wobei in Ausgangsstellung die der Hakenöffnung entsprechende Innenseite 74 eines Hakenstückes 7 mit der dem nächst höheren Hakenstück 7 zugehörigen Außenseite der Zwängteiles 9 bündig ist. Dies wird vor allem in Fig. 7, aber auch in Fig. 2 deutlich. Dabei sind die Zwängteile 9 für die einzelnen Hakenstücke 7 einstückig verbunden und im Bereich der Haken 7 selbst durch Schlitze 44 voneinander abgeteilt. Somit können auch diese unterteilten Zwängteile 9 im Bereich des Betätigungsbolzens 18 in gleicher Weise wie nicht unterteilte Zwängteile 9 ausgebildet oder in noch zu beschreibender Weise sogar verstellbar sein. Somit ist diese Ausgestaltung der Haltestücke 6 als mehrfach übereinanderliegende nach unterschiedlichen Seiten gerichtete Haken 7 auch bei allen übrigen Ausführungsbeispielen mit solchen vergleichbaren Haken einschließlich der nach Fig. 32 bis 35 in analoger Weise anwendbar.

In mehreren Ausführungsbeispielen, beispielsweise Fig. 8, 11 bis 14, 19, gegebenenfalls auch 15 bis 18 sowie 32 bis 36 ist eine der vorbeschriebenen Ausbildung der Befestigungsvorrichtung 1 entsprechende Befestigungsvorrichtung dargestellt, bei welcher ebenfalls wenigstens ein von einem Exzenter 10 beaufschlagtes Druckstück 14 zum Zurückziehen der Haltestücke 6 bei gleichzeitiger Querbewegung der Haltestücke 6 in Verriegelungsposition vorgesehen ist, wobei aber das oder die die Querbewegung der Haltestücke 8 dabei bewirkende Zwängteil oder Spreizteil 9 seinerseits von einem an ihm angreifenden Exzenter 45 gegenläufig zu den Druckstücken 14 verschiebbar ist. Somit kann die Querbewegung der Haltestücke verstärkt und vor allem die Position nach dieser Querbewegung besser arretiert und unterstützt werden. Dieser Ausgestaltung kommt deshalb eine schutzwürdige Bedeutung zu. Dabei wird diese Ausgestaltung gegenüber einer Lösung mit feststehendem Zwängteil 9 durch die erfindungsgemäße Ausbildung mit Hilfe von Druckstücken 14, an diesen angreifenden Exzentern 10 und relativ dazu im Schiebesitz verschieblichem Bolzen 18 ermöglicht, weil der Kupplungsbereich 17 des Bolzens 18 ohne weiteres die entsprechende Anordnung des weiteren Exzenters 45 in Form einer mit Schiebesitz darauf drehfest angeordneten weiteren Exzenterscheibe erlaubt.

An dem Zwängteil 9 greift dabei ein gleichzeitig mit dem oder den Exzenterscheiben 10 für die Druckstücke 14 verdrehbarer, mit seiner Exzentrizität jedoch diesen entgegengesetzter Exzenter 45 an.

Man erkennt deutlich beispielsweise in Fig. 8 und 19, daß zwischen den Exzenterscheiben 10 für die Druckstücke 14 die weitere Exzenterscheibe 45 formschlüssig mit Schiebesitz auf dem Kupplungsbereich 17 des Bolzens 18 angeordnet ist, die an einer Angriffskurve 46 oder Lochung des Zwängteiles 9 angreift und in ihrer Exzentrizität der der Exzenterscheiben 10 für die Druckstücke 14 entgegengesetzt ist. Letzeres wird besonders deutlich auch in Fig. 34, wo allerdings nur ein Druckstück 14 mit Hilfe einer mittleren Exzenterscheibe 10 verschiebbar ist, während zwei äußere Zwängteile ihrerseits mittels Exzentern 45 gegensinnig verschiebbar sind.

Gegebenenfalls könnten zumindest die Exzenterscheiben gemäß den Figuren 8 und 19 einstückig verbunden sein.

Die Exzentrizität des Exzenters 45 für den Zwängteil 9 ist so groß, daß dieser bis nahe an oder in den Bereich der Öffnung 47 des Hinterschneidungen 3 aufweisenden Profiles 5 verschiebbar ist. Dies ist vor allem in Fig. 8, 11 und 19 deutlich zu erkennen, wo nämlich das Zwängteil 9 bis in diese Öffnung 47 ragt, so daß eine Verformung der Hakenstücke 7 aus ihrer Verriegelungsposition durch irgendwelche äußeren Einflüsse ausgeschlossen ist, solange der Bolzen 18 nicht wieder in Löseposition verdreht wird. Eine evtl. Verbiegung der Haken, wie sie bei der Ausführungsform nach Fig. 6 evtl. noch denkbar erscheint, ist dabei völlig ausgeschlossen. Der Querschnitt der Öffnung 47 wird in diesem Falle vollständig ausgefüllt, so daß sich eine praktisch spielfreie Verankerung mit entsprechend hoher Belastbarkeit selbst durch dynamische Kräfte ergibt. Die Gesamtdicke der Haltestücke 6 und des Zwängteiles 9 entspricht dabei der Weite dieser Einstecköffnung 47 des Profiles 5.

In den Figuren 17 bis 19 sind Ausführungsbeispiele dargestellt, bei denen das Zwängteil 9 jeweils mehrere gegeneinander etwas versetzte Schenkel 48, Platten 49 oder Bereiche aufweist und in seiner seitlichen Abmessung oder Dicke selbsttätig federnd verstellbar ist, wobei die Federkraft der Zwängteil-Schenkel 48 oder -Platten 49 größer als die Spreizkraft an den Halteteilen 6 ist. Dadurch können unterschiedlich große Spreizbewegungen der Halteteile 6 entsprechend der federnden Nachgiebigkeit der Zwängteil-Schenkel 48 oder -Platten 49 realisiert werden.

Eine größte Spreizbewegung der Halteteile 6 ergibt sich dann, wenn die Zwängteil-Schenkel 48 oder -Platten 49 bei ihrem Eintritt in die Öffnung 47 überhaupt nicht nachgeben müssen, weil die Öffnung eine entsprechende Weite hat. Ist diese Öffnung aber etwas enger, können die Zwängteil-Schenkel 48 oder -Platten 49 bei ihrem Eintritt um ihren Federweg in ihrer Dicke vermindert werden. Somit ist eine Selbstzentrierung und selbsttätige spielfreie Verriegelung in der Öffnung 47 möglich.

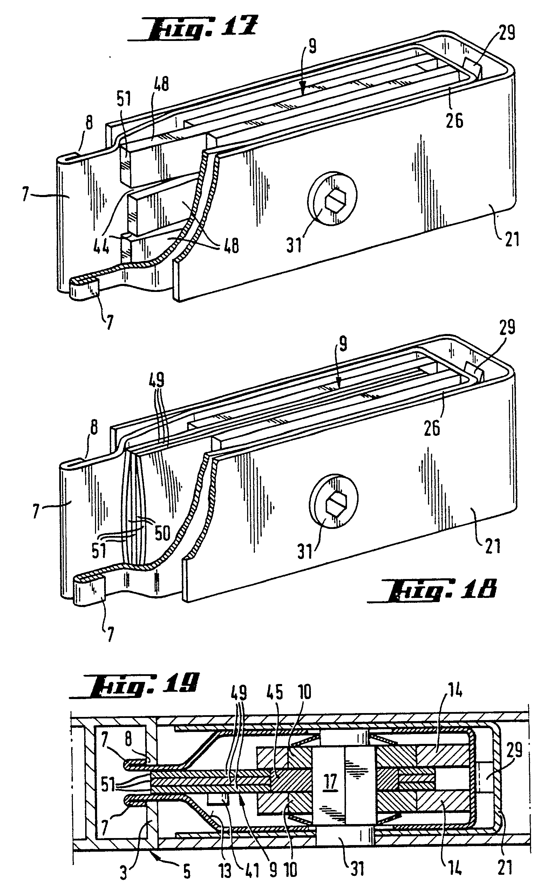

In Fig. 18 und 19 erkennt man eine Ausführungsform, bei welcher das Zwängteil 9 aus wenigstens zwei, in diesem Falle drei etwa parallelen, durch vertikale Schlitze 50 getrennte plattenförmige Teile gebildet ist, von denen die nach außen liegenden gegen das jeweilige Halteteil 6 ballig gewölbt sind, wobei die Mantellinie der Wölbung in Verstellrichtung läuft. Somit hat dieses Zwängteil 9 etwa in seiner halben Höhe seine größte Dicke. Bei der Verstellung raltiv zu den Schrägflächen 13 an den Haltestücken kann nun diese Wölbung je nach Weite der Öffnung 47 mehr oder weniger zusammengedrückt werden, da auch der Zwischenraum in dem Schlitz zu dem Mittelteil nach außen gewölbt ist.

In Fig. 17 ist eine Ausführungsform dargestellt, bei welcher das Eingriffende 51 des Zwängteiles 9 zumindest zwei, im Ausführungsbeispiel drei durch horizontale Schlitze 44 getrennte Schenkel 48 aufweist, die in Ausgangstellung geringfügig gegeneinander versetzt auseinander laufen und gegen eine Rückstellkraft in eine etwa bündige Position zueinander verformbar sind, wenn die Öffnung 47 entsprechend eng ist.

Dabei ist für diese in ihrer Weite federnden Zwängteile 9 wiederum vorteilhaft, daß sie von einer eigenen Exzenterscheibe 45 gemeinsam verschiebbar sind, wenn an dem Bolzen 18 auch die Exzenter 10 und die Druckstücke 14 verstellt werden. Für den Benutzer ändert sich somit im Bedienungskomfort nichts, weil er lediglich den Bolzen 18 verdrehen muß, um gleichzeitig die Rückzug- und Querbewegung der Haltestücke 6 sowie zusätzlich die Festlegung in Halteposition mit Hilfe des Zwängteiles zu erreichen, wobei dieses sich noch selbsttätig an etwas voneinander abweichende Abmessungen einer Öffnung 47 anpassen kann.

Eine zweckmäßige und vorteilhafte Ausführungsform der Erfindung ist in den Figuren 11 bis 14 dargestellt. Die Exzenterscheibe 10 ist dabei als Nockenkurvenscheibe ausgebildet und gleitet mit ihrem Nocken 52 an einer Gegenkurve 15 des Druckstückes 14 entlang, wobei das Druckstück 14 ausschließlich zwischen dieser Nockenscheibe 10 und der Innenseite des Federbügels 12 angeordnet ist und die Nokkenscheibe 10 in ihrer Durchmessererstreckung quer zu der Verschieberichtung des Druckstückes 14 die Höhe des sie aufnehmenden Gehäuse 21 oder Profiles 23 ebenso ausfüllt wie das Druckstück 14 selbst. Somit wird das Profil 23 bzw. das Gehäuse 21 beim Verschieben zur Zwangsführung für das Druckstück, so daß die Angriffskurve in diesem Falle nicht als am Druckstück 14 geschlossen begrenzete Lochung ausgebildet sein muß. Somit ergibt sich ein kürzeres und damit leichteres Druckstück 14.

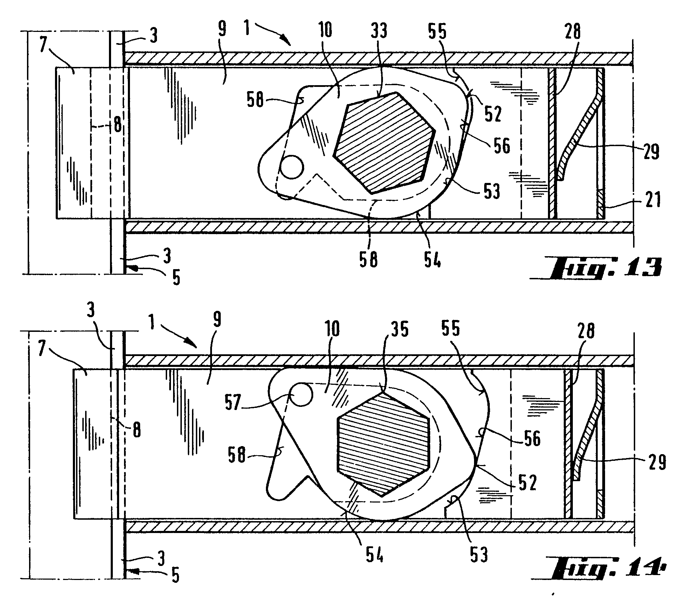

In den Fig. 12 bis 14 erkennt man die günstige Ausgestaltung dieser Lösung, wonach nämlich die Nockenscheibe 10 an ihrem Umfang in Drehrichtung vor dem Nocken 52 einen bogenförmigen Bereich 54 hat, der bei unverschobenem Druckstück 14 an einem Bogenbereich 53 der Angriffkurve dieses Druckstückes 14 anliegt und als Führung für eine erste Drehbewegung dient und daß die Angriffkurve 15 im Bereich des Nockens 52 selbst am Ausgangspunkt des Nockens 52 gemäß Fig. 12 ebenfalls bogenförmig ist, so daß der Nocken 52 zunächst ohne Verschiebung des Druckstückes 14 an diesem Bogen 55 od. dgl. Ausbuchtung gemäß Fig. 13 mit etwas Abstand entlanggleitet, und daß am Ende dieses Bogens 55 eine Schrägfläche 56 an dem Druckstück 14 vorgesehen ist, die sich dem Schwenkweg des Nockens nähert und ihn schneidet, so daß beim Verdrehen des Nockens 52 das Druckstück 14 zeitverzögert verschiebbar ist.

Gemäß Fig. 11 sind zwei derartige Nockenscheiben als Exzenterscheiben 10 beidseits eines Zwängteiles 9 vorgesehen. Die Nockenscheiben 10 haben dabei einen Vorsprung 57, der als Zapfen od. dgl. ausgebildet sein kann und ihnen gegenüber in axialer Richtung jeweils seitlich vorsteht. Die Vorsprünge 57, die miteinander fluchten, greifen dabei an einer Angriffkurve 58 des Zwängteiles 9 und zwar an einer Schräge dieses Zwängteiles 9 an, die gegenüber dem Schwenkweg der Vorsprünge 57 schräg verläuft und diese schneidet und sich der Drehlagerung der Nocken- oder Exzenterscheiben 10 nähert. Dabei beginnt im Ausführungsbeispiel diese als Schräge ausgebildete Angriffkurve 58 des Zwängteiles 9 unmittelbar am Ausgangspunkt der Bewegung der Vorsprünge 57 oder zumindest näher zu diesem Ausgangspunkt als die Schrägfläche 56 des Druckstückes 14, so daß die Verschiebung des Zwängteiles 9 zeitlich vor der des Druckstückes 14 beginnt. Statt einer Verschiebung des Zwängteiles mit denselben Nockenscheiben 10 und daran seitlich angeordneten Vorprüngen 57 könnte aber auch eine veitere Exzenter- oder Nockenscheibe zwischen den beiden Nockenscheiben angeordnet sein, um den Zwängteil 9 bevorzugt zeitlich vor den Druckstücken zu verschieben.

Durch dieses zeitliche Verschieben des Zwängteiles 9 vor dem Rückziehen der Haltestücke 6 werden diese zunächst auseinanderbewegt, so daß schon eine erste lockere Verbindung an dem Profil 5 hergestellt werden kann, bevor die endgültige Verklemmung erfolgt. Dies kann bei manchen Montagen, wo zunächst eine Vorfixierung erwünscht ist, die Arbeiten erheblich erleichtern. Darüber hinaus werden die durch die Verdrehung des Bolzens aufgebrachten Schiebekräfte zeitlich versetzt aufgebracht und so für den Benutzer besser verteilt, so daß er nicht die Summe all dieser Verschiebekräfte gleichzeitig aufbringen muß.

Es wurde schon erwähnt, daß in dem U-förmigen Gehäuse 21, welches auch bei dem Ausführungsbeispiel nach Fig. 11 bis 14 vorhanden ist, mit der den Federbügel 12 abstützenden Druckfeder 29 ein Paket aus Federbügel 12, darin angeordneten Zwängteil 9 und Druckstücken 14 sowie diese beaufschlagenden Exzentern 10 und ggfs. 45 und dem im Mittelbereich 17 profilierten Bolzen 18 zusammengehalten ist und nach axialem Eindrücken des Bolzens 18 in das stirnseitige Ende 22 eines Hohlprofiles 23 einschiebbar ist, bis der Bolzen 18 an der vorbereiteten Lochung 20 des Profiles 23 aufgrund seiner Rückstellkraft nach außen springt.

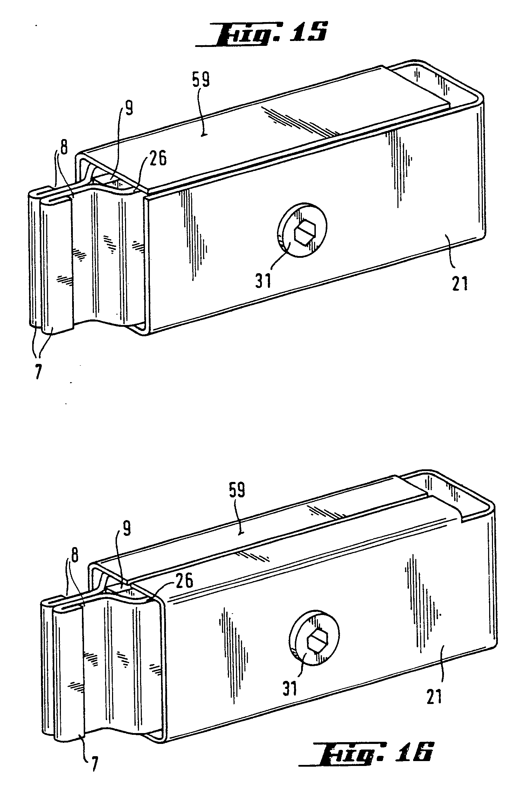

In den Figuren 15 und 16 ist nun dargestellt, daß das U-förmige Gehäuse 21 auch an wenigstens einer der rechtwinklig zu den U-Schenkeln liegenden Fläche 59, bevorzugt an beiden rechtwinklig zu den U-Schenkeln befindlichen Flächen 59 einen Abschluß als Gehäusewandung aufweisen kann, die durch Abkantung wenigstens eines der U-Schenkel ausgebildet sind. Auf diese Weise kann sich gegenüber der Ausführungsform nach Fig. 1 eine weitgehend allseits geschlossene Ausbildung des Gehäuses 21 ergeben, welches somit sehr gut als eigenes Handelsteil vertrieben werden kann und in seinem Inneren alle Funktionen einschließlich eventuellen Anschlägen für Nockenscheiben und dergleichen enthält, so daß es in beliebige Profile mit unterschiedlichen Querschnittshöhen paßt und dennoch auch nach oben und unten abgeschlossen ist.

Es wurde bereits anhand mehrerer Ausführungsbeispiele gezeigt, daß die Haltestücke 6 voneinander weggerichtete Haken 7 haben und zum Verankern in einem etwa C-förmigen Profil 5 zusätzlich zu ihrer Rückzugbewegung voneinander wegspreizbar sein können. Ferner wurde bezüglich der Ausführungsform nach Fig. 32 bis 36 erwähnt, daß zwei mit ihren Hakenöffnungen 8 einander zugewandte Hakenstücke 7 als Haltestücke 6 vorgesehen sein können, die in Ausgangslage gespreizt sind und durch an äußeren Schrägen 13 außen angreifende Zwängelemente 9 beim Zurückziehen der Haltestücke 6 mit Hilfe eines einzigen Druckstückes 14 zangenförmig oder pinzettenartig einander genähert werden und die Stege 4 eines T-Profiles 5 od. dgl. gemäß Fig. 36 umschließen können.

In diesem letzteren Falle sind in dem U-förmigen Gehäuse 21 an dessen Seitenwänden zwei Zwängstücke 9 angeordnet, die die nach außen gerichteten Schrägen 13 der zueinander gewandten Hakenstücke 7 beaufschlagen, und zwischen diesen Zwängstücken 9 verläuft der die Haken 7 wiederum einstückig tragende Federbügel 12, in dessen Innerem ein einziges Druckstück 14 mit einer Exzenterscheibe 10 angeordnet ist, welches wiederum im Schiebesitz auf dem Kupplungsbereich 17 des Bolzens 18 sitzt. Somit ergibt sich vom Prinzip her eine Befestigungsvorrichtung etwa der gemäß Fig. 1, wobei jedoch in zweckmäßiger Weise für andersartige Profile eine gegenläufige Querbewegung der Haken 7 erreicht wird.

Dabei sind im Ausführungsbeispiel die beiden die Außenseite der Haltestücke 6 beaufschlagenden Zwängstücke 9 ebenfalls von an Öffnungen im Bereich des Bolzens 18 angreifenden Exzenterscheiben 45 beaufschlagt und entgegengesetzt zu dem Druckstück 14 verschiebbar, wodurch diese Ausführungsform mit der der Figur 8 vergleichbar wird. Die Zwängstücke 9 werden dabei gemäß Fig. 36 nämlich sehr nahe an das Profil 5 herangeschoben, so daß ein Aufbiegen der Haken 7 in Klemmstellung praktisch ausgeschlossen ist, weil diese sehr nahe an ihrer Angriffsstelle entgegen einer solchen Aufbiegerichtung abgestützt und arretiert sind.

In den Figuren 20 bis 31 sind drei Ausführungsbeispiele einer Befestigungsvorrichtung 1 dargestellt, die in wesentlichen Teilen den vorbeschriebenen Befestigungsvorrichtungen 1 entsprechen, bezüglich der Ausbildung der Haltestücke 6 aber abweichen, woraus in gewissem Umfange dann auch eine Abweichung bei den Zwängteilen 9 zur Durchführung der Querbewegung der Haltestücke 6 resultiert.

Bei diesen Ausführungsbeispielen gemäß Fig. 20 bis 31 ist vorgesehen, daß die Befestigungsvorrichtung 1 ein aus ihrem Gehäuse 21 stirnseitig vorstehendes, in die Öffnung 47 des Gegenprofiles 5 passendes Riegelement 60 aufweist, in dessen innerem Umriß relativ zueinander nach außen über die seitlichen Oberflächen des Riegels 60 spreizbare Halte- oder Hakenstücke 6 angeordnet sind. Dies ermöglicht bei der Montage zunächst einen Teileintritt in die Öffnung 47, wodurch bereits Querbewegungen weitgehend ausgeschlossen sind, wie es beispielsweise in den Figuren 23 und 26, aber auch Figur 30 erkennbar ist.

Die die nach außen spreizbaren Haltestücke 6 begrenzende Öffnung 61 an diesem Riegelelement 60 weist dabei zwei einander zugewandte Schneiden 62 od. dgl. Konusstücke auf, deren Abstand durch Verstellung der einen Schneide 62 näher zu der anderen hin durch die Verdrehung des Exzenters 10 verkleinerbar ist. Diese Schneiden 62 od. dgl. greifen dabei an den Haltestücken 6 an und können diese durch ihre schräge Form bei der erwähnten Abstandsverminderung seitlich verstellen, wie man es beim Vergleich zwischen Figur 23 und 24 oder zwischen Figur 26 und 27 oder zwischen Figur 30 und 31 deutlich erkennt. Dabei sind wiederum wenigstens zwei quer zueinander spreizbare Haltestücke 6 in der Riegelausnehmung oder -Öffnung 61 Rücken an Rücken angeordnet und haben an ihren den Schneiden 62 zugewandten Schmalseiten jeweils den Schrägen der Schneiden 62 entsprechende Gegenschrägen 63. Dadurch wird das Auseinanderspreizen der Haltestücke 6 beim Verringern des Abstandes der Schneiden 62 erleichtert und begünstigt.

Analog den schon früher beschriebenen Ausführungsbeispielen ist das Riegelelement 60 auf der seiner in das Gegenprofil 5 einsteckbaren Seite entgegengesetzten Seite in seinem Inneren von dem Exzenter 10 über das Druckstück 14 beaufschlagt, wobei wiederum eine auf dem Kupplungsbereich 17 des profilierten Bolzens 18 sitzende Exzenterscheibe 10 vorgesehen ist. Seitlich ist dieses Riegelelement 60 von dem Federbügel 12 umschlossen, der in die Öffnung 61 des Riegelelementes 60 eingreift und einander zugewandte, miteinander eine Schneide 62 bildende Laschen 64 hat. Diese Laschen 64 beaufschlagen die eine Stirnseite und die in das Gegenprofil 5 einführbare Schneide 62 des Riegelelementes 60 beaufschlagt die andere Seite der auseinander spreizbaren Halteteile 6. Dies erkennt man deutlich in Figur 23/24, 26/27 und 30/31.

In diesem Falle ist zwischen dem Federbügel 12 und dem relativ zu ihm mit Hilfe des Exzenters 10 verschiebbaren Riegelelement 60 eine Druckfeder 65, insbesondere eine einstückig aus dem Federbügel 12 nach innen ausgestanzte Blattfeder vorgesehen, die in ihrer Funktion etwa der Feder 29 der vorbeschriebenen Ausführungsbeispiele entspricht.

Gegebenenfalls könnten analog der Ausführungsform nach Figur 2 und 7 in der Riegelausnehmung 61 übereinander nach verschiedenen Seiten bewegbare Haltestücke 6 angeordnet sein, die in Ausgangsstellung mit ihren Schmal- oder Stirnseiten wenigstens teilweise an der Schräge der Schneide 62 des Riegelelementes 60 und der Gegenschneide anliegen, von welchen sie nach außen verstellbar sind. Die Dicke des Riegelelementes 60 würde dabei zweckmäßigerweise zumindest in dem in Gebrauchsstellung durch die Öffnung 47 des Profiles 5 verlaufenden Bereich der Öffnungsweite entsprechen, um eine stabile Halterung auch bei dieser Ausführungsform zu erzielen.

Während im Ausführungsbeispiel nach Figur 20 und 22 bis 24 das Riegelelement einen relativ stabilen umlaufenden Rahmen hat oder bildet, in dessen Innerem einerseits der Exzenter und andererseits die Halteteile angeordnet sind, ist im Ausführungsbeispiel nach Fig. 21 und 25 bis 26 vorgesehen, daß das Riegelelement 60 von einem umlaufenden Zugband 66, insbesondere einem Stahlband oder Federband gebildet ist, welches im Bereich des Inneren des Profiles 5 einen eine Nut 67 od. dgl. aufweisenden Schneiden- oder Konuskörper 68 und am diesem entgegengesetzten Ende ein Druckstück 14 zusammenhält. Der schneidenförmige Spreizkörper 68 liegt dabei an den von dem Federbügel 12 zusammengehaltenen Haltestücken 6 in gleicher Weise an, wie die Schneide 62 bei der Ausführungsform mit dem Riegelelement 60.

Die Enden 72 des Zugbandes 66 sind dabei in einem Schlitz 73 des Druckstückes 14 verankert, der vorzugsweise an der dem schneidenförmigen Spreizkörper 68 abgewandten Rückseite des Druckstückes 14 vorgesehen ist. Aufgrund der Zugkraft an dem Zugband 66 ist dies eine ausreichend stabile Verankerung dieses Zugbandes. Dabei werden diese Halte- und Zugkräfte beim Betätigen des Exzenters 10 und dessen Verstellung des Druckstückes 14 noch vergrößert.

Bei der Ausführungsform nach Figur 28 bis 31 sind die Haltestücke 6 gegenüber der Öffnung 61 des Riegels 60 in Verschieberichtung verlängert und umfassen diesen im Bereich seiner Schneide 62. In ihrem Inneren haben sie eine keilförmige Querschnittsöffnung 70, die von der Schneide 62 des Riegels 60 beaufschlagt ist, wie man es vor allem in den Figuren 30 und 31 deutlich erkennt. Bei der Betätigung des Exzenters 10 und des Druckstückes 14 wird wiederum der Abstand der beiden Schneiden 62 verringert, wodurch die Haltestücke 6 und auch die Verlängerung 69 welche mit Haken 7 versehen sind in der in Fig. 31 dargestellten Weise aufgespreizt werden.

Bei den vorbeschriebenen Ausführungsbeispielen gemäß Figur 20 bis 28 ist — wie bereits erwähnt — vorgesehen, daß der Federbügel 12 mit Laschen 64 eine Schneide 62 bildet. Diese Schneide 62 geht jedoch nicht über die gesamte Höhe des Federbügels, sondern ein Teil des Federbügels 12 ist jeweils neben den die Schneide 62 bildenden Laschen 64 als Blattfeder 71 in Verstellrichtung verlängert und diese Blattfedern 71 greifen als Rückstellfedern an den Außenseiten der Haltestücke 6 an. Somit wird beim Lösen der Befestigungsvorrichtung 1 wiederum die selbsttätige Rückverstellung der Haltestücke mit diesen Federn 71 des Federbügels 12 bewirkt.

Es sei noch erwähnt, daß bei einer Ausführungsform, bei welcher zwei parallele Nockenscheiben 10 vorgesehen sind, die einen Vorsprung 57 für den Angriff an dem Zwängteil 9 haben, wie es z. B. in Fig. 11 dargestellt ist, als Vorsprung ein die beiden Nockenscheiben 10 verbindender Stift dienen kann, der an beiden Nockenscheiben befestigt, vorzugsweise in fluchtende Lochungen eingesteckt sein kann. Die beiden gegeneinander weisenden Vorsprünge 57 der Figur 11 wären dann gewissermaßen einstückig verbunden und würden als ein Stift in entsprechenden Ausnehmungen der Nockenscheiben 10 stecken. Dadurch könnten die auftretenden Kräfte besser übertragen werden, also insgesamt auch die Befestigungsvorrichtung stabiler und langlebiger gestaltet werden. Ferner sei erwähnt, daß auch die beiden Druckstücke 14 einstückig verbunden sein könnten, wobei sie selbstverständlich genügend Platz für eine eventuelle Bewegung eines Zwängteiles 9 in dessen Bewegungsrichtung freilassen.

## Patentansprüche

1. Befestigungsvorrichtung (1) mit einem Klemmverschluß (2) zum lösbaren Angreifen an Hinterschneidungen (3) oder Stege (4) aufweisenden Profilen (5) od. dgl., wobei die Vorrichtung (1) wenigstens zwei Haltestücke (6) aufweist, von denen zumindest eines im Befestigungsbereich als Haken (7) ausgebildet ist und die in Richtung der Hakenöffnung (8) gegen eine Rückstellkraft relativ voneinanderweg verschwenkbar gelagert sind, wobei diese Haltestücke (6) eine Abstützung sowie eine sie in verschwenkter Position haltende Arretierung besitzen, wobei ferner ein Betätigungselement für die Relativbewegung der beiden Haltestücke (6) vorgesehen ist, welches um eine in Schwenkrichtung der Haltestücke (6) orientierte Achse (11) drehbar ist, wobei wenigstens eine Feder (12) für die Lösebewegung der Haltestücke (6) vorgesehen ist und als Betätigungselement ein Exzenter dient, welcher um eine in Schwenkrichtung der Haltestücke (6) orientierte Achse drehbar ist, wobei ferner Schrägflächen (13) an den Haltestücke (6) und/oder an mit diesen zusammenwirkenden Gegen-Gleitflächen eines Zwäng- oder Spreizteiles (9) bei der Betätigung des Exzenters (10) und der daraus resultierenden gleichzeitigen Verschiebung der Haltestücke (6) in Form einer Rückzugbewegung zum Festlegen an der/den Hinterschneidungen (3) oder Stegen (4) deren Seitwärtsbewegung bewirken, wobei der Exzenter (10) mit einem exzentrischen Kupplungsloch (16) ausgebildet ist, in welches ein konzentrisch drehbarer Bolzen (18) mit einem in Drehrichtung formschlüssig passenden Kupplungsbereich (17) einsteckbar ist, der in Gebrauchsstellung mit seinem Betätigungsende (19) die Lochung (20) eines Gehäuses (21) und/oder Profiles (23) durchsetzt, dadurch gekennzeichnet, daß die beim Bewegen in die Halteposition rückziehbaren Haltestücke (6) von einem Druckstück (14) beaufschlagt sind, welches eine Angriffsfläche (15) für den Exzenter (10) aufweist und daß der Bolzen (18) zum Einschieben der Vorrichtung in das Gehäuse (21) oder Profil (23) in axialer Richtung relativ zu dem Exzenter (10) gegen eine Rückstellkraft verschieblich ist.

2. Befestigungsvorrichtung nach Anspruch 1, dadurch gekennzeichnet, daß der Exzenter (10) als Scheibe ausgebildet ist.

3. Befestigungsvorrichtung, bei welcher die Haltestücke (6) der Bolzen (18), Exzenterscheibe (10) und Druckstück (14) in einem sie zumindest teilweise umgreifenden Gehäuse (21) angeordnet sind, welches in die lichte Öffnung der Stirnseite (22) eines Profiles (23) paßt, das mit dem querverlaufenden, Hinterschneidungen (3) oder Stege (4) aufweisenden Profil (5) verbunden werden soll, nach Anspruch 1 oder 2, dadurch gekennzeichnet, daß der Betätigungsbolzen (18) mit seinem Angriffsende (19) eine Wand (24) dieses Gehäuses (21) durchsetzt und in der Profillochung, vorzugsweise mit der Profiloberfläche bündig abschließend, gelagert ist.

4. Befestigungsvorrichtung, bei welcher die Haltestücke (6) von einem etwa U-förmigen Federbügel (12) in Offenstellung gehalten sind, dessen U-Schenkel (26) Langlöcher (27) für den Durchtritt des Betätigungsbolzens (18) und für die durch die Betätigung erforderliche Längsbewegung aufweisen, nach einem der Ansprüche 1 bis 3, dadurch gekennzeichnet, daß der U-Quersteg (28) des Federbügels (12) an der Innenseite von dem Druckstück (14) beaufschlagt ist.

5. Befestigungsvorrichtung nach einem der Ansprüche 1 bis 4, dadurch gekennzeichnet, daß das Zwäng- oder Spreizteil (9) auf dem Kupplungsbereich (17) des Bolzens (18) gelagert ist und beidseitig dieses Spreizteiles (9) je eine Exzenterscheibe (10) ebenfalls auf dem Kupplungsbereich (17) des Bolzens (18) sitzt und je ein Druckstück (14) an einer Angriffskurve (15) beaufschlagt.

6. Befestigungsvorrichtung nach einem der Ansprüche 1 bis 5, dadurch gekennzeichnet, daß als Angriffskurve (15) eine Lochung (30) in den Druckstücken (14) vorgesehen ist, deren Ausdehnung in Verschieberichtung vorzugsweise dem Durchmesser der jeweiligen Exzenterscheibe (10) entspricht.

7. Befestigungsvorrichtung nach einem der Ansprüche 1 bis 6, dadurch gekennzeichnet, daß die Ausdehnung der Angriffskurve (15) in den Druckstücken (14) quer zu ihrer Verschieberichtung größer als der Durchmesser der Exzenterscheibe (10) und vorzugsweise größer als die Summe des Durchmessers der Exzenterscheibe (10) und der Exzentrizität ist.

8. Befestigungsvorrichtung nach Anspruch 6, dadurch gekennzeichnet, daß die Lochung in den Druckstücken (14) kreisrund ist und der Abmessung der Exzenterscheibe (10) entspricht und der obere und der untere Rand des Druckstückes (14) gegenüber des es aufnehmenden Gehäuses (21) od. dgl. in Ausgangsstellung einen Abstand mindestens entsprechend der Exzentrizität der Exzenterscheibe (10) hat.

9. Befestigungsvorrichtung nach einem der Ansprüche 1 bis 8, dadurch gekennzeichnet, daß in axialer Richtung beidseits des Kupplungsbereiches (17) des Bolzens (18) im Querschnitt kreisrunde Ansätze (31) als Drehlager des Bolzens (18) vorgesehen sind und der Kupplungsbereich (17) eine diese kreisrunden Bereiche (31) in seiner Abmessung überragende Profilierung (32) aufweist.

10. Befestigungsvorrichtung nach einem der Ansprüche 1 bis 9, dadurch gekennzeichnet, daß für den Formschluß zwischen Bolzen (18) und Kupplungsloch (16) des Exzenters (10) der Bolzen (18) als Keilwelle ausgebildet oder mit einer oder mehreren Abflachungen versehen ist.

11. Befestigungsvorrichtung nach einem der Ansprüche 1 bis 10, dadurch gekennzeichnet, daß der Kupplungsbereich (17) im Querschnitt mehrkantförmig, insbesondere sechs- oder achtkantig ist oder eine Zahnung aufweist und die Kupplungs- bzw. Exzenterscheiben (10, 45) eine dieser Profilierung (32) entsprechende Innenöffnung mit Schiebesitz hat.

12. Befestigungsvorrichtung nach einem der Ansprüche 1 bis 11, dadurch gekennzeichnet, daß bei Schließ- bzw. Gebrauchsstellung eine axiale Verschiebbarkeit des Bolzens (18) relativ zur Exzenterscheibe (10) gesperrt ist.

13. Befestigungsvorrichtung nach einem der Ansprüche 1 bis 12, dadurch gekennzeichnet, daß der im Querschnitt profilierte Kupplungsbereich (17) mit der Mitte seiner Flachseiten (33) jeweils bündig zu den Mantellinien der im Querschnitt kreisrunden Bolzenabschnitte (31) der Bolzenlagerung ist und daß das diese kreisrunden Abschnitte (31) aufnehmende Langloch (27) zumindest im Bereich des Kupplungsbereiches (17) als Anschlag (34) bis nahe an den Kupplungsbereich

(17) herangeführt ist oder bis nahe zu dem Kupplungsbereich (17) vorspringt, so daß bei verdrehtem Bolzen ein nicht abgeflachter Bereich des Kupplungsbereiches (17) — bei einem mehrkantförmigen Kupplungsbereich (17) eine Mehrkantspitze (35) — gegen die Innenseite des Randbereiches des Langloches (27) anschlägt.

14. Befestigungsvorrichtung nach einem der Ansprüche 1 bis 13, dadurch gekennzeichnet, daß der Bolzen (18) an dem seinem Betätigungsende (19) entgegengesetzten Lagerende (36) eine Innenausnehmung (37) hat, mit welcher er auf einer nach innen geformten hülsenartigen Einbuchtung (38) des den Federbügel (12) umschließenden Gehäuses (21) drehbar gelagert ist, wobei die Tiefe der Bolzenausnehmung (37) zumindest um den vorgesehenen Verschiebeweg des Bolzens (18) größer als der Lagervorsprung (38) ist und daß im Inneren der Bolzenausnehmung (37) eine Rückstellfeder (39), vorzugsweise eine Druckfeder angeordnet ist.

15. Befestigungsvorrichtung nach einem der Ansprüche 1 bis 14, dadurch gekennzeichnet, daß das Zwäng- oder Spreizteil (9) einen seitlichen Vorsprung (41) hat, gegen den wenigstens eines der Druckstücke (14) mit seiner seinem Betätigungsende (42) abgewandten Seite (43) in Ausgangsstellung vor Durchführung der Befestigungsbewegung anliegt, so daß eine Verdrehung des Exzenters (10) in der der Befestigungsrichtung entgegengesetzten Richtung gesperrt ist.

16. Befestigungsvorrichtung nach einem der vorstehenden Ansprüche, wobei das oder die die Querbewegung der Haltestücke (6) bewirkende Zwängteil oder Spreizteil (9) seinerseits von einem an ihm angreifenden Exzenter (45) gegenläufig zu den Druckstücken (14) verschiebbar ist und wobei der an dem Zwängteil (9) angreifende Exzenter (14) eine zu dem oder den Exzentern (10) entgegengesetzte Exzentrizität aufweist, dadurch gekennzeichnet, daß zwischen den Exzenterscheiben (10) für die Druckstücke (14) die weitere Exzenterscheibe (45) formschlüssig mit Schiebesitz auf dem Kupplungsbereich (17) des Bolzens (18) angeordnet ist, die an einer Angriffskurve (46) oder Lochung des Zwängteiles (9) angreift.

17. Befestigungsvorrichtung nach einem der vorstehenden Ansprüche, dadurch gekennzeichnet, daß die Exzenterscheiben einstückig verbunden sind.

18. Befestigungsvorrichtung nach Anspruch 16, dadurch gekennzeichnet, daß die Exzentrizität des Exzenters (45) für den Zwängteil (9) so groß ist, daß dieser bis nahe an oder in den Bereich der Öffnung (47) des Hinterschneidungen (3) aufweisenden Profiles (5) verschiebbar ist.

19. Befestigungsvorrichtung nach einem der Ansprüche 1 bis 18, dadurch gekennzeichnet, daß das Zwängteil (9) mehrere gegeneinander etwas versetzte Schenkel (48), Platten (49) oder Bereiche aufweist und in seiner seitlichen Abmessung oder Dicke selbsttätig federnd verstellbar ist, wobei die Federkraft der Zwängteil- Schenkel (48) oder Platten (49) größer als die Spreizkraft an den Halteteilen (6) ist.

20. Befestigungsvorrichtung nach Anspruch 19, dadurch gekennzeichnet, daß das Zwängteil (9) wenigstens zwei parallele, durch einen Schlitz (50) getrennte plattenförmige Teile aufweist, von denen wenigstens eines insbesondere nach außen gegen ein Halteteil und/oder die Innenseite eines Profiles ballig gewölbt ist, wobei die Mantellinie der Wölbung in Verstellrichtung verläuft.

21. Befestigungsvorrichtung nach Anspruch 19 oder 20, dadurch gekennzeichnet, daß das Zwängteil (9) aus drei durch etwa vertikale Zwischenräume (50) voneinander getrennter plattenförmiger Schenkel (49) gebildet ist, deren beide äußeren Schenkel voneinanderweg gewölbt sind, wobei auch der Zwischenraum (50) zu dem Mitteilteil nach außen gewölbt ist.

22. Befestigungsvorrichtung nach Anspruch 19, dadurch gekennzeichnet, daß das Eingriffende (51) des Zwängteiles (9) zumindest zwei durch wenigstens einen etwa horizontalen Schlitz (44) getrennte Schenkel (48) aufweist, die in Ausgangsstellung geringfügig gegeneinander versetzt auseinanderlaufen und gegen eine Rückstellkraft in eine etwa bündige Position zueinander verformbar sind.

23. Befestigungsvorrichtung nach einem der Ansprüche 1 bis 22, dadurch gekennzeichnet, daß die Exzenterscheibe (10) als Nockenscheibe ausgebildet ist und mit ihrem Nocken an einer Gegenkurve (15) des Druckstückes (14) entlanggleitet, wobei das Druckstück (14) ausschließlich zwischen dieser Nockenscheibe (10) und der Innenseite des Federbügels (12) angeordnet ist und die Nockenscheibe (10) in ihrer Durchmessererstreckung quer zu der Verschieberichtung des Druckstückes (14) die Höhe des sie aufnehmenden Gehäuses (21) oder Profiles (23) ebenso ausfüllt, wie das Druckstück (14) selbst.

24. Befestigungsvorrichtung nach einem der Ansprüche 1 bis 23, dadurch gekennzeichnet, daß das Druckstück (14) beim Verdrehen des Nockens (52) zeitverzögert zum Drehbeginn des Nockens (42) verschiebbar ist.

25. Befestigungsvorrichtung nach einem der Ansprüche 1 bis 24, dadurch gekennzeichnet, daß die Nockenscheibe (10) an ihrem Umfang in Drehrichtung vor dem Nocken (52) einen kreisbogenförmigen Bereich (54) hat, der bei unverschobenem Druckstück (14) an einem Bogenbereich (53) der Angriffskurve dieses Druckstückes (14) anliegt und als Führung für eine erste Drehbewegung dient und daß die Angriffskurve (15) im Bereich des Nockens (52) selbst am Ausgangspunkt des Nockens (52) ebenfalls bogenförmig ist, so daß der Nocken (52) zunächst ohne Verschiebung des Druckstückes (14) an diesem Bogen entlanggleitet, und daß am Ende dieses Bogens (55) eine Schrägfläche (56) an dem Druckstück (14) vorgesehen ist, die sich dem Schwenkweg des Nockens nähert und ihn schneidet.

26. Befestigungsvorrichtung nach einem der Ansprüche 1 bis 25, dadurch gekennzeichnet, daß die Nockenscheibe(n) (10) einen Vorsprung (57), Zapfen od. dgl. aufweist, der ihr gegenüber in axialer Richtung seitlich vorsteht und an einer Angriffskurve (58) des Zwängteiles (9), vorzugsweise einer Schräge dieses Zwängteiles (9) angreift, die gegenüber dem Schwenkweg dieses Vorsprunges (57) schräg verläuft und sich der Drehlagerung der Nocken- oder Exzenterscheibe (10) nähert.

27. Befestigungsvorrichtung nach einem der Ansprüche 1 bis 26, dadurch gekennzeichnet, daß die vorzugsweise als Schräge ausgebildete Angriffskurve (58) des Zwängteiles (9) unmittelbar an Ausgangspunkt der Bewegung des Vorsprunges (57) oder zumindest näher zu diesem Ausgangspunkt beginnt als die Schrägfläche (56) des Druckstückes (14), so daß die Verschiebung des Zwängteiles (9) zeitlich vor der des Druckstückes (14) beginnt.

28. Befestigungsvorrichtung nach einem der Ansprüche 1 bis 27, dadurch gekennzeichnet, daß in dem U-förmigen Gehäuse (21) mit der den Federbügel (12) abstützenden Druckfeder (29) ein Paket aus Federbügel (12), darin angeordnetem Zwängteil (9) und Druckstücken (14) sowie diese beaufschlagenden Exzentern (10, 45) und dem im Mittelbereich (17) profilierten Bolzen (18) zusammengehalten ist und nach axialem Eindrücken des Bolzens (18) in das stirnseitige Ende (22) eines Hohlprofiles (23) einschiebbar ist, bis der Bolzen (18) an der vorbereiteten Lochung (20) des Profiles (23) aufgrund seiner Rückstellkraft nach außen springt.

29. Befestigungsvorrichtung nach einem der Ansprüche 1 bis 28, dadurch gekennzeichnet, daß das U-förmige Gehäuse (21) auch an wenigstens einer der rechtwinklig zu den U-Schenkeln liegenden Fläche (59), vorzugsweise an beiden rechtwinklig zu den U-Schenkeln befindlichen Flächen (59) einen Abschluß als Gehäusewandung aufweist, die vorzugsweise durch Abkantung wenigstens eines der U-Schenkel ausgebildet ist.

30. Befestigungsvorrichtung nach einem der Ansprüche 1 bis 29, dadurch gekennzeichnet, daß zwei mit ihren Hakenöffnungen (8) einander zugewandte Hakenstücke (7) als Haltestücke vorgesehen sind, die in Ausgangslage gespreizt sind und durch an äußeren Schrägen (13) außen angreifende Zwängelemente (9) beim Zurückziehen der Haltestücke (6) zangenförmig oder pinzettenartig einander genähert werden und die Stege (4) eines T-Profiles (5) od. dgl. umschließen.

31. Befestigungsvorrichtung nach Anspruch 30, dadurch gekennzeichnet, daß in dem U-förmigen Gehäuse (21) an dessen Seitenwänden zwei Zwängstücke (9) angeordnet sind, die die nach außen gerichteten Schrägen (13) der zueinander gewandten Hakenstücke (7) beaufschlagen, und daß zwischen diesen Zwängstücken (9) der die Haken (7) insbesondere einstückig tragende Federbügel (12) verläuft, in dessen Innerem ein Druckstück (14) mit einer Exzenterscheibe (10) angeordnet ist.

32. Befestigungsvorrichtung nach Anspruch 30 oder 31, dadurch gekennzeichnet, daß die beiden die Außenseite der Haltestücke (6) beaufschlagenden Zwängstücke (9) ebenfalls von an Öffnungen im Bereich des Bolzens (18) angreifenden Exzenterscheiben (45) beaufschlagt und entgegengesetzt zu dem Druckstück (14) verschiebbar sind.

33. Befestigungsvorrichtung nach Oberbegriff des Anspruches 1, dadurch gekennzeichnet, daß sie ein aus ihrem Gehäuse (21) od. dgl. stirnseitig vorstehendes, in die Öffnung des Gegenprofiles (5) passendes Riegelelement (60) od. dgl. aufweist, in dessen innerem Umriß relativ zueinander nach außen über die seitlichen Oberflächen des Riegels (60) spreizbare Halte- oder Hakenstücke (6) angeordnet sind.

34. Befestigungsvorrichtung nach Anspruch 33, dadurch gekennzeichnet, daß die die nach außen spreizbaren Haltestücke (6) begrenzende Öffnung (61) zwei einander zugewandte Schneiden (62) od. dgl. Konusstücke aufweist, deren Abstand durch Verstellung der einen Schneide (62) näher zuder anderen hin durch die Verdrehung des Exzenters (10) verkleinerbar ist und daß die Schneiden (62) od. dgl. an den Haltestücken (6) angreifen und diese durch ihre schräge Form seitlich verstellen.

35. Befestigungsvorrichtung nach Anspruch 33 oder 34, dadurch gekennzeichnet, daß das Riegelelement (60) auf der seiner in das Gegenprofil (5) einsteckbaren Seite entgegengesetzten Seite in seinem Inneren von dem Exzenter (10) über das Druckstück (14) beaufschlagt ist, vorzugsweise von einer auf einem Kupplungsbereich (17) eines profilierten Bolzens (18) sitzenden Exzenterscheibe (10), und daß dieses Riegelelement (60) von einem Federbügel (12) umschlossen ist, der in die Öffnung (61) des Riegelelementes (60) eingreift und einander zugewandte, miteinander eine Schneide (62) od. dgl. bildende Laschen (64) hat, und daß diese Laschen (64) die eine Stirnseite und die in das Gegenprofil (5) einführbare Schneide (62) des Riegelementes (60) die andere Seite der auseinanderspreizbaren Halteteile (6) beaufschlagt.

36. Befestigungsvorrichtung nach einem der Ansprüche 1 bis 35, dadurch gekennzeichnet, daß zwischen dem Federbügel (12) und dem relativ zu ihm mit Hilfe des Exzenters (10) verschiebbaren Riegelelement (60) eine Druckfeder (65), insbesondere eine einstückig aus dem Federbügel (12) nach innen ausgestanzte Blattfeder vorgesehen ist.

37. Befestigungsvorrichtung nach einem der Ansprüche 1 bis 36, dadurch gekennzeichnet, daß wenigstens zwei quer zueinander spreizbare Haltestücke (6) in der Riegelausnehmung (61) Rücken an Rücken angeordnet sind und an ihren den Schneiden (62) zugewandten Schmalseiten jeweils den Schrägen der Schneiden (62) entsprechende Gegenschrägen (63) haben.

38. Befestigungsvorrichtung nach einem der Ansprüche 1 bis 37, dadurch gekennzeichnet, daß in der Riegelausnehmung (61) übereinander nach verschiedenen Seiten bewegbare Haltestücke (6) angeordnet sind, die in Ausgangsstellung mit ihren Stirnseiten wenigstens teilweise an der Schräge der Schneide (62) des Reigelementes (60) und der Gegenschneide anliegen, von welcher sie nach außen verstellbar sind, und daß die Dicke des Riegelementes (60) zumindest in dem in Gebrauchsstellung durch die Öffnung (47) des Profiles (5) verlaufenden Bereich der Öffnungsweite entspricht.

39. Befestigungsvorrichtung nach einem der Ansprüche 1 bis 38, dadurch gekennzeichnet, daß das Riegelelement (60) von einem umlaufenden Zugband (66), insbesondere Stahlband oder Federband gebildet ist, welches im Bereich des Inneren des Profiles (5) einen eine Nut (67) od. dgl. aufweisenden Schneidenkörper (68) und am diesem entgegengesetzten Ende ein Druckstück (14) zusammenhält und daß der schneidenförmige Spreizkörper (68) an den von dem Federbügel (12) zusammengehaltenen Haltestücken (6) anliegt.

40. Befestigungsvorrichtung nach einem der Ansprüche 1 bis 39, dadurch gekennzeichnet, daß die Enden (72) des Zugbandes (66) in einem Schlitz (73) des Druckstückes (14) verankert sind, der vorzugsweise an der dem schneidenförmigen Spreizkörper (68) abgewandten Rückseite des Druckstückes (14) vorgesehen ist.

41. Befestigungsvorrichtung nach einem der Ansprüche 1 bis 40, dadurch gekennzeichnet, daß die Haltestücke (6) gegenüber der Öffnung (61) des Riegels (60) verlängert sind und diesen umfassen und in ihrem Inneren eine keilförmige Öffnung (70) haben, die von der Schneide (62) des Riegels (60) beaufschlagt sind.

42. Befestigungsvorrichtung nach einem der Ansprüche 33 bis 41, dadurch gekennzeichnet, daß ein Teil des Gehäuses (21) jeweils neben den die Schneide (62) bildenden Laschen (64) als Blattfeder (71) verlängert ist und als Rückstellfeder an den Haltestücken (6) angreift.

43. Befestigungsvorrichtung nach einem der Ansprüche 1 bis 42, dadurch gekennzeichnet, daß der Bolzen (18) mit beiden zylindrischen Ansätzen (31) jeweils in einer Ausnehmung des Gehäuses (21) od. dgl. gelagert ist und des Gehäuses (21) an dem der Betätigungsseite (19) des Bolzens (18) gegenüberliegenden Ende zwischen sich und dem Profil (23) einen Anschlag (34) insbesondere eine Einziehung oder Nut od. dgl. aufweist, dessen in axialer Richtung des Bolzens verlaufende Erstreckung mindestens dem Verschiebeweg des Bolzens (18) gegen die Kraft einer Druckfeder (39) entspricht.

44. Befestigungsvorrichtung nach Anspruch 26, dadurch gekennzeichnet, daß zwei parallele Nockenscheiben (10) vorgesehen sind und als Vorsprung für den Angriff an dem Zwängteil (9) ein die beiden Nockenscheiben (10) verbindender Stift dient, der an beiden Nockenscheiben (10) befestigt, vorzugsweise in fluchtenden Lochungen eingesteckt ist, und/oder das die Druckstücke (14) in ihrem außerhalb des Verschiebeweges des Zwängteiles (9) befindlichen Bereich gegebenenfalls miteinander verbunden, vorzugsweise einstückig verbunden sind.

**Claims**

1. A fixing device (1) with a clamping lock (2) for releasably acting upon profiles (5) or the like with undercuts (3) or webs (4), the device (1) having at least two holding members (6), at least one of which takes the form of a hook (7) in the fixing region, which are mounted so as to be swingable in the direction of the hook opening (8) relative to and away from one another against a restoring force, said holding members (6) possessing a support as well as an arresting device holding them in the swung position, provision further being made for an operating element for the relative motion of the two holding members (6), said element being rotatable about an axis (11) oriented in the direction of swing of the holding members (6), at least one spring (12) being provided for the release motion of the holding members (6) and an eccentric serving as the operating element and being rotatable about an axis oriented in the direction of swing of the holding members (6), when the eccentric (10) is operated and the holding members (6) are consequently simultaneously displaced in the form of a retracting motion, slanting faces (13) on the holding members (6) and/or on counter sliding faces co-operating therewith and belonging to an urging or expanding part (9) cause lateral movement of said holding members for fixation to the undercut(s) (3) or webs (4), the eccentric (10) being configured with an eccentric coupling hole (16) into which a concentrically rotatable stud (18) having a coupling area (17) fitting in a formlocking manner in the direction of rotation is insertable, in the position for use said stud traversing with its operating end (19) the hole (20) of a housing (21) and/or profile (23), characterized in that the holding members (6) retractable during motion into the holding position are acted upon by a thrust piece (14) having a working surface (15) for the eccentric (10) and that the stud (18) is displaceable in the axial direction relative to the eccentric (10) against a restoring force to insert the device in the housing (21) or profile (23).

2. The fixing device as claimed in claim 1, characterized in that the eccentric (10) takes the form of a disc.

3. The fixing device wherein the holding members (6), stud (18), eccentric disc (10) and thrust piece (14) are disposed in a housing (21) which encloses them at least partially and fits into the inside opening of the front end (22) of a profile (23) which is to be connected to the transversely extending profile (5) having undercuts (3) or webs (4), as claimed in claim 1 or claim 2, characterized in that the operating stud (18) has its acting end (19) traversing a wall (24) of said housing (21) and is mounted in the profile hole, preferably providing a flush finish with the profile surface.

4. The fixing device wherein the holding members (6) are maintained in the open position by a spring saddle (12) of approximately U-shape, the U-sides (26) thereof having oblong holes (27) for the passage of the operating stud (18) and for the longitudinal motion required by the operation, as claimed in any one of claims 1 to 3, characterized in that the U-cross piece (28) of the spring saddle (12) is acted upon on the inside by the thrust piece (14).

5. The fixing device as claimed in any one of claims 1 to 4, characterized in that the urging part or expanding part (9) is mounted on the coupling area (17) of the stud (18) and on both sides of said expanding part (9) in each case one eccentric disc (10) is likewise seated on the coupling area (17) of the stud (18) and in each case acts upon a thrust piece (14) on a working curve (15).

6. The fixing device as claimed in any one of claims 1 to 5, characterized in that a hole (30) in the thrust pieces (14) is provided as the working curve (15), the expanse thereof in the direction of displacement preferably corresponding to the diameter of the respective eccentric disc (10).

7. The fixing device as claimed in any one of claims 1 to 6, characterized in that the expanse of the working curve (15) in the thrust pieces (14), transversely to their direction of displacement, is larger than the diameter of the eccentric disc (10) and preferably larger than the sum of the diameter of the eccentric disc (10) and the eccentricity.

8. The fixing device as claimed in claim 6, characterized in that the hole in the thrust pieces (14) is circular and corresponds to the size of the eccentric disc (10) and in the starting position the upper and lower edge of the thrust piece (14) have a distance relative to the housing (21) or the like receiving said piece, the distance corresponding at least to the eccentricity of the eccentric disc (10).

9. The fixing device as claimed in any one of claims 1 to 8, characterized in that in the axial direction on both sides of the coupling area (17) of the stud (18) there are shoulders (31) circular in cross section as pivot bearings of the stud (18) and the coupling area (17) has a profiling (32) projecting in size beyond said circular areas (31).

10. The fixing device as claimed in any one of claims 1 to 9, characterized in that the stud (18) takes the form of a splined shaft or is provided with one or more flattenings for the form-locking between stud (18) and coupling hole (16) of the eccentric (10).

11. The fixing device as claimed in any one of claims 1 to 10, characterized in that the coupling area (17) is of polygonal shape in cross section, in particular is hexagonal or octagonal, or has a toothing and the coupling discs or eccentric discs (10, 45) have an inside opening corresponding to said profiling (32) with a slide fit.

12. The fixing device as claimed in any one of claims 1 to 11, characterized in that in the closed position or position for use, axial displaceability of the stud (18) relative to the eccentric disc (10) is stopped.

13. The fixing device as claimed in any one of claims 1 to 12, characterized in that the coupling area (17) profiled in cross section has the middle of its flat sides (33) in each case flush with the surface lines of the stud portions (31) which are circular in cross section and belong to the stud bearing, and that at least in the region of the coupling area (17) the oblong hole (27) receiving said circular portions (31) is brought as a stop (34) close to the coupling area or projects close to the coupling area (17), so that when the stud is twisted a non-flattened region of the coupling area (17) — a vertex (35) in the case of a polygonal coupling area (17) — butts against the inside of the marginal area of the oblong hole (27).

14. The fixing device as claimed in any one of claims 1 to 13, characterized in that the stud (18) has at the bearing end (36) opposite its operating end (19) an inside recess (37) with which said stud is rotatably mounted on an inwardly shaped, sleeve-like recess (38) of the housing (21) enclosing the spring saddle (12), the depth of the stud recess (37) being larger than the bearing projection (38) by at least the path of displacement of the stud (18) and that a restoring spring (39), preferably a compression spring, is disposed in the inside of the stud recess (37).

15. The fixing device as claimed in any one of claims 1 to 14, characterized in that the urging or expanding part (9) has a lateral projection (41) against which at least one of the thrust pieces (14) has its side (43) averted from its operating end (42) resting in the starting position before the fixing motion is performed, so that twisting of the eccentric (10) in the direction opposite that of fixation is stopped.

16. The fixing device as claimed in any one of the preceding claims, the urging part or expanding part(s) (9) causing the holding members (6) to move transversely being in turn displaceable in opposite directions to the thrust pieces (14) by an eccentric (45) engaging said part and the eccentric (14) engaging the urging part (9) having an eccentricity opposite the eccentric(s) (10), characterized in that between the eccentric discs (10) for the thrust pieces (14) the further eccentric disc (45) is disposed in a form-locking manner and with a slide fit on the coupling area (17) of the stud (18), said further eccentric disc engaging a working curve (46) or hole of the urging part (9).

17. The fixing device as claimed in any one of the preceding claims, characterized in that the eccentric discs are integrally connected.

18. The fixing device as claimed in claim 16, characterized in that the eccentricity of the eccentric (45) for the urging part (9) is so great that said urging part is displaceable close to or into the area of the opening (47) of the profile (5) having undercuts (3).

19. The fixing device as claimed in any one of claims 1 to 18, characterized in that the urging part (9) has a plurality of somewhat staggered arms (48), plates (49) or areas and is automatically elastically adjustable in its lateral size or thickness, the resilience of the arms (48) or plates (49) of the urging part being greater than the expanding force on the holding parts (6).

20. The fixing device as claimed in claim 19, characterized in that the urging part (9) has at least two parallel, plate-shaped parts separated by a slit (50), at least one of said parts being in particular convex towards a holding part and/or the inside of a profile, the surface line of the curvature running in the direction of adjustment.

21. The fixing device as claimed in claim 19 or claim 20, characterized in that the urging part (9) is formed by three plate-shaped arms (49) separated from one another by approximately vertical spaces (50), the two outer arms being curved away from one another, the space (50) towards the middle part also being convex.

22. The fixing device as claimed in claim 19, characterized in that the engaging end (51) of the urging part (9) has at least two arms (48) separated by at least one approximately horizontal slit (44), in the starting position said arms diverging slightly offset from one another and being deformable towards one another into an approximately level position against a restoring force.

23. The fixing device as claimed in any one of claims 1 to 22, characterized in that the eccentric disc (10) takes the form of a cam disc and slides with its cams along a counter curve (15) of the thrust piece (14), the thrust piece (14) being disposed exclusively between said cam disc (10) and the inside of the spring saddle (12) and the cam disc (10) diameter transverse to the direction of displacement of the thrust piece (14) filling the height of the housing (21) or profile (23) receiving said disc, just as the thrust piece (14) itself.

24. The fixing device as claimed in any one of claims 1 to 23, characterized in that when the cam (52) is twisted the thrust piece (14) is displaceable in a manner deferred in time relative to when the cam (42) begins to turn.

25. The fixing device as claimed in any one of claims 1 to 24, characterized in that the cam disc (10) has on its periphery a bow-shaped area (54) located before the cam (52) in the direction of rotation, when the thrust piece (14) has not been displaced said area resting against a bow area (53) of the working curve of said thrust piece (14) and serving as a guide for a first rotary motion and that the working curve (15) is likewise bow-shaped in the region of the cam (52), even at the starting point of the cam (52), so that the cam (52) initially slides along said bow without displacement of the thrust piece (14) and that at the end of said bow (55) the thrust piece (14) is provided with a slanting face (56) which approaches the swivel path of the cam and intersects it.

26. The fixing device as claimed in any one of claims 1 to 25, characterized in that the cam disc(s) (10) have a projection (57), pin or the like which protrudes laterally thereto in the axial direction and engages a working curve (58) of the urging part (9), preferably a slant thereof extending at an inclination relative to the swivel path of said projection (57) and approaching the pivot bearing of the cam disc or eccentric disc (10).

27. The fixing device as claimed in any one of claims 1 to 26, characterized in that the working curve (58) which preferably takes the form of a slant and belongs to the urging part (9) begins directly at the starting point of the motion of the projection (57) or at least closer to said starting point than the slanting face (56) of the thrust piece (14), so that the displacement of the urging part (9) precedes that of the thrust piece (14) in time.

28. The fixing device as claimed in any one of claims 1 to 27, characterized in that in the U-shaped housing (21) including the compression spring (29) supporting the spring saddle (12) there is held together a pack comprising spring saddle (12), incorporated urging part (9) and thrust pieces (14) as well as eccentrics (10, 45) acting upon the same and the stud (18) profiled in the centre area, and after axial insertion of the stud (18) is shiftable into the front end (22) of a hollow profile (23) until the stud (18) owing to its restoring force springs outwardly at the prepared hole (20) of the profile (23).

29. The fixing device as claimed in any one of claims 1 to 28, characterized in that at least one face (59) lying at right angles to the U-sides, preferably at both faces (59) lying at right angles to the U-sides, the U-shaped housing (21) has a cover as a housing wall, preferably formed by bending at least one of the U-sides.

30. The fixing device as claimed in any one of claims 1 to 29, characterized in that two hook members (7) facing one another with their hook openings (8) are provided as holding members, said members being expanded in the starting position and approaching one another in the manner of pliers or pincers and enclosing the webs (4) of a T-profile (5) or the like by means of urging elements (9) outwardly engaging outside slants (13) as the holding members (6) are retracted.

31. The fixing device as claimed in claim 30, characterized in that two urging parts (9) are disposed in the U-shaped housing (21) at the side walls thereof and act upon the outwardly directed slants (13) of the hook members (7) facing one another, and that the spring saddle (12) bearing the hooks (7) in particular integrally therewith extends between said urging parts (9), a thrust piece (14) with an eccentric disc (10) being disposed in the interior of said spring saddle.

32. The fixing device as claimed in claim 30 or claim 31, characterized in that the two urging parts (9) acting upon the outside of the holding members (6) are likewise acted upon by eccentric discs (45) engaging openings in the region of the stud (18) and are displaceable in opposite directions to the thrust piece (14).

33. The fixing device according to the preamble of claim 1, characterized by having a bolt element (60) or the like projecting from the front end of the housing (21) thereof and fitting into the opening of the counterpart profile (5), in the inside contour of said bolt there being holding or hook members (6) expandable relative to one another beyond the lateral surfaces of the bolt (60).

34. The fixing device as claimed in claim 33, characterized in that the opening (61) bounding the expandable holding members (6) has two cutting edges (62) or similar conical members facing one another, the spacing thereof being reducible by shifting the one cutting edge (62) closer to the other by twisting the eccentric (10) and that the cutting edges (62) or the like engage the holding members (6) and shift them laterally through the slanting shape of the former.

35. The fixing device as claimed in claim 33 or claim 34, characterized in that the bolt element (60) is acted upon in its interior, on its side opposite that insertable into the counterpart profile (5), by the eccentric (10) via the thrust piece (14), preferably by an eccentric disc (10) seated on a coupling area (17) of a profiled stud (18), and that said bolt element (60) is enclosed by a spring saddle (12) which engages into the opening (61) of the bolt element (60) and has plates (64) facing each other and together forming a cutting edge (62) or the like, and that said plates (64) act upon the one end side and the cutting edge (62) which belongs to the bolt element (60) and is insertable into the counterpart profile (5) acts upon the other side of the expandable holding parts (6).

36. The fixing device as claimed in any one of claims 1 to 35, characterized in that there is interposed between the spring saddle (12) and the bolt element (60) displaceable relative thereto with the aid of the eccentric (10) a compression spring (65), in particular a leaf spring punched inwardly from and in one piece with the spring saddle (12).

37. The fixing device as claimed in any one of claims 1 to 36, characterized in that at least two holding members (6) expandable transversely to one another are disposed back to back in the recess (61) of the bolt and on their narrow sides facing the cutting edges (62) in each case have counterpart slants (63) corresponding to the slants of the cutting edges (62).

38. The fixing device as claimed in any one of claims 1 to 36, characterized in that holding members (6) movable towards different sides are superposed in the recess (61) of the bolt, in the starting position said members having their end sides resting at least partly against the slant of the cutting edge (62) of the bolt element (60) and the counterpart edge to be shiftable outwardly thereby, and that the thickness of the bolt element (60) corresponds to the width of the opening at least in the area extending through the opening (47) of the profile (5) in the position for use.

39. The fixing device as claimed in any one of claims 1 to 38, characterized in that the bolt element (60) is formed by a peripheral tie band (66), in particular a steel band or spring band which in the region of the inside of the profile (5) holds together a cutting edge member (68) having a groove (67) or the like and at the end opposite thereto a thrust piece (14), and that the expanding member (68) rests against the holding members (6) held together by the spring saddle (12).

40. The fixing device as claimed in any one of claims 1 to 39, characterized in that the ends (72) of the tie band (66) are anchored in a slit (73) of the thrust piece (14) preferably at the rear thereof averted from the expanding body (68).

41. The fixing device as claimed in any one of claims 1 to 40, characterized in that the holding members (6) are extended relative to the opening (61) of the bolt (60) and embrace the bolt and in their interior they have a wedge-shaped opening (70) acted upon by the cutting edge (62) of the bolt (60).

42. The fixing device as claimed in any one of claims 33 to 41, characterized in that in addition to the plates (64) forming the cutting edge (62), part of the housing (21) is in each case extended as a leaf spring (71) and engages the holding members (6) as a restoring spring.

43. The fixing device as claimed in any one of claims 1 to 42, characterized in that the stud (18) is mounted with two cylindrical shoulders (31) in a recess of the housing (21) or the like and the housing (21) has at the end opposite the operating side (19) of the stud (18) a stop (34), in particular a hollow or groove or the like, which is located between said housing and the profile (23) and the expanse of said stop in the axial direction of the stud corresponding at least to the path of displacement of the stud (18) against the force of a compression spring (39).

44. The fixing device as claimed in claim 26, characterized in that two parallel cam discs (10) are provided and a pin which connects the two cam discs (10) and is secured to both cam discs (10), preferably is inserted in aligned holes, serves as the projection for engagement to the urging part (9), and/or the thrust pieces (14) may be interconnected in their area outside the path of displacement of the urging part (9), preferably integrally connected.

## Revendications

1. Dispositif de fixation (1) muni d'une fermeture de serrage (2) pour la venue en prise libérable avec des profilés (5) ou éléments similaires présentant des contre-dépouilles (3) ou des ailes (4), ce dispositif (1) comportant au moins deux pièces de retenue (6) dont au moins l'une est réalisée sous la forme d'un crochet (7) dans la zone de fixation, et qui sont montées avec faculté de pivotement à l'écart l'une de l'autre en direction de l'ouverture d'accrochage (8), en s'opposant à une force de rappel, ces pièces de retenue (6) possédant un appui, ainsi qu'un arrêt qui les maintient dans la position prise par pivotement ; dispositif dans lequel un élément d'actionnement, par ailleurs prévu pour le mouvement relatif des deux pièces de retenue (6), peut tourner autour d'un axe (11) orienté dans la direction de pivotement des pièces de retenue (6), au moins un ressort (12) étant prévu pour le mouvement de dissociation des pièces de retenue (6), et l'élément d'actionnement étant matérialisé par un excentrique qui peut tourner autour d'un axe orienté dans la direction de pivotement des pièces de retenue (6) ; dans lequel, en outre, des rampes (13) façonnées sur les pièces de retenue (6) et/ou sur des surfaces complémentaires de glissement, coopérant avec ces pièces, d'une partie (9) de contrainte ou d'écartement, provoquent un mouvement latéral desdites pièces lors de l'actionnement de l'excentrique (10) et du coulissement simultané des pièces de retenue (6), qui en résulte, sous la forme d'un mouvement de retrait en vue de l'assujettissement à la/aux contre-dépouilles (3) ou ailes (4) ; et dans lequel l'excentrique (10) est réalisé percé d'un trou excentré d'accouplement (16) dans lequel une cheville (18) pouvant tourner concentriquement, est emboîtable par une zone d'accouplement (17) qui s'adapte par concordance de formes dans le sens de rotation et qui traverse dans la position d'utilisation, par son extrémité d'actionnement (19), la découpe (20) d'un boîtier (21) et/ou d'un profilé (23), caractérisé par le fait que les pièces de retenue (6), pouvant être rétractées au cours du mouvement à la position de retenue, sont soumises à l'action d'un organe de pression (14) qui présente une surface (15) de venue en prise, pour l'excentrique (10) ; et par le fait qu'un coulissement peut être imprimé à la cheville (18) dans le sens axial par rapport à l'excentrique (10), en s'opposant à une force de rappel, en vue de la pénétration du dispositif dans le boîtier (21) ou profilé (23).

2. Dispositif de fixation selon la revendication 1, caractérisé par le fait que l'excentrique (10) est réalisé sous la forme d'un disque.

3. Dispositif de fixation dans lequel les pièces de retenue (6), la cheville (18), le disque d'excentrique (10) et l'organe de pression (14) sont logés dans un boîtier (21) qui les entoure au moins partiellement et s'adapte dans l'ouverture intérieure de la face extrême (22) d'un profilé (23), lequel doit être relié au profilé (5) qui s'étend transversalement et présente des contre-dépouilles (3) ou des ailes (4), selon la revendication 1 ou 2, caractérisé par le fait que la cheville d'actionnement (18) traverse, par son extrémité (19) de venue en prise, une paroi (24) de ce boîtier (21) et est implantée dans la découpe du profilé, en venant préférentiellement à fleur de la surface de ce profilé.

4. Dispositif de fixation dans lequel les pièces de retenue (6) sont maintenues en position ouverte par un étrier élastique (12) sensiblement en U, dont les branches (26) du U présentent des trous oblongs (27) pour le passage de la cheville d'actionnement (18) et pour le mouvement longitudinal nécessité par l'actionnement, selon l'une des revendications 1 à 3, caractérisé par le fait que la membrure transversale (28) du U de l'étrier élastique (12) est soumise, à la face interne, à l'action de l'organe de pression (14).

5. Dispositif de fixation selon l'une des revendications 1 à 4, caractérisé par le fait que la partie (9) de contrainte ou d'écartement est montée sur la zone d'accouplement (17) de la cheville (18) ; et, de part et d'autre de cette partie d'écartement (9), un disque d'excentrique respectif (10) repose également sur la zone d'accouplement (17) de la cheville (18), et sollicite un organe respectif de pression (14) sur une came (15) de venue en prise.

6. Dispositif de fixation selon l'une des revendications 1 à 5, caractérisé par le fait qu'il est prévu dans les organes de pression (14), en tant que came (15) de venue en prise, une découpe (30) dont l'étendue correspond de préférence, dans la direction de coulissement, au diamètre du disque d'excentrique considéré (10).

7. Dispositif de fixation selon l'une des revendications 1 à 6, caractérisé par le fait que, transversalement par rapport à la direction de coulissement des organes de pression (14), l'étendue de la came (15) de venue en prise ménagée dans ces organes est supérieure au diamètre du disque d'excentrique (10) et excède, de préférence, la somme du diamètre du disque d'excentrique (10) et de l'excentricité.

8. Dispositif de fixation selon la revendication 6, caractérisé par le fait que la découpe ménagée dans les organes de pression (14) est circulaire et correspond à la dimension du disque d'excentrique (10) ; et les bords supérieur et inférieur de l'organe de pression (14) présentent dans la position initiale, par rapport au boîtier (21) ou élément similaire logeant cet organe, une distance qui correspond au moins à l'excentricité du disque d'excentrique (10).

9. Dispositif de fixation selon l'une des revendications 1 à 8, caractérisé par le fait que des appendices (31) de section circulaire sont prévus, en tant que paliers de rotation de la cheville (18), de part et d'autre de la zone d'accouplement (17) de la cheville (18) dans le sens axial, et la zone d'accouplement (17) comporte un profilage (32) dont les cotes sont supérieures à celles de ces régions circulaires (31).

10. Dispositif de fixation selon l'une des revendications 1 à 9, caractérisé par le fait que, pour la solidarisation par concordance de formes entre la cheville (18) et le trou d'accouplement (16) de l'excentrique (10), la cheville (18) est réalisée sous la forme d'un arbre claveté, ou bien est pourvue d'un ou plusieurs méplats.

11. Dispositif de fixation selon l'une des revendications 1 à 10, caractérisé par le fait que la zone d'accouplement (17) possède une section polygonale, notamment hexagonale ou octogonale, ou bien comporte une denture ; et les disques respectifs d'accouplement ou d'excentriques (10, 45) présentent une ouverture interne avec siège coulissant, qui correspond à ce profilage (32).

12. Dispositif de fixation selon l'une des revendications 1 à 11, caractérisé par le fait que, dans la position respective de fermeture ou d'utilisation, une faculté de coulissement axial de la cheville (18), par rapport au disque d'excentrique (10), est interdite.

13. Dispositif de fixation selon l'une des revendications 1 à 12, caractérisé par le fait que la zone d'accouplement (17) de section profilée vient à fleur, par le centre de ses côtés aplatis (33), des génératrices respectives des tronçons de cheville (31) de la portée de la cheville, qui possèdent une section circulaire ; et par le fait que, au moins au voisinage de la zone d'accouplement (17), le trou oblong (27) qui reçoit ces tronçons circulaires (31) est prolongé, en tant que butée (34), jusqu'à proximité de la zone d'accouplement (17) ou bien fait saillie jusqu'à proximité de cette zone d'accouplement (17), de sorte que, lorsque la cheville a effectué une rotation, une région non aplatie de la zone d'accouplement (17) — une pointe polygonale (35) en présence d'une zone d'accouplement polygonale (17) — vient buter contre la face interne de la région marginale du trou oblong (27).

14. Dispositif de fixation selon l'une des revendications 1 à 13, caractérisé par le fait que la cheville (18) présente, à l'extrémité de montage (36) opposée à son extrémité d'actionnement (19), un évidement interne (37) au moyen duquel elle est montée rotative sur une indentation (38) du type douille, déformée vers l'intérieur, du boîtier (21) entourant l'étrier élastique (12), la profondeur de l'évidement (37) de la cheville excédant la protubérance de montage (38), au moins de la course de coulissement prévue de la cheville (18) ; et par le fait qu'un ressort de rappel (39), de préférence un ressort de pression, se trouve à l'intérieur de l'évidement (37) de la cheville.

15. Dispositif de fixation selon l'une des revendications 1 à 14, caractérisé par le fait que la partie (9) de contrainte ou d'écartement présente une saillie latérale (41) contre laquelle, dans la position initiale, au moins l'un des organes de pression (14) est appliqué par son côté (43) opposé à son extrémité d'actionnement (42), avant l'exécution du mouvement de fixation, de telle sorte qu'une rotation de l'excentrique (10) soit interdite dans la direction opposée à la direction de fixation.

16. Dispositif de fixation selon l'une des revendications précédentes, dans lequel la ou les parties (9) de contrainte ou d'écartement, provoquant le mouvement transversal des pièces de retenue (6), peuvent être à leur tour animées d'un coulissement dans le sens inverse des organes de pression (14), par un excentrique (45) avec lequel elles sont en prise ; et dans lequel l'excentrique (14) venant en prise avec la partie de contrainte (9) présente une excentricité inverse de celle du ou des excentriques (10) caractérisé par le fait que le disque d'excentrique supplémentaire (45) implanté par concordance de formes avec assise coulissante sur la zone d'accouplement (17) de la cheville (18), entre les disques d'excentriques (10) associés aux organes de pression (14), est en prise avec une came (46) de venue en prise ou avec une découpe de la partie de contrainte (9).

17. Dispositif de fixation selon l'une des revendications précédentes, caractérisé par le fait que les disques d'excentriques sont reliés d'un seul tenant.

18. Dispositif de fixation selon la revendication 16, caractérisé par le fait que l'excentricité de l'excentrique (45) associé à la partie de contrainte (9) est d'une ampleur telle que cette partie puisse coulisser jusqu'à proximité ou jusqu'au voisinage de l'ouverture (47) du profilé (5) présentant des contre-dépouilles (3).

19. Dispositif de fixation selon l'une des revendications 1 à 18, caractérisé par le fait que la partie de contrainte (9) comprend plusieurs branches (48), plaques (49) ou régions sensiblement décalées les unes des autres, et peut être réglée élastiquement de manière automatique quant à sa dimension latérale ou à son épaisseur, la force élastique des branches (48) ou des plaques (49) de la partie de contrainte étant supérieure à la force d'écartement appliquée aux pièces de retenue (6).

20. Dispositif de fixation selon la revendication 19, caractérisé par le fait que la partie de contrainte (9) présente au moins deux éléments parallèles en forme de plaques qui sont séparés par l'intermédiaire d'une fente (50), et dont au moins l'un comporte notamment un bombement massif vers l'extérieur, en direction d'une pièce de retenue et/ou de la face interne d'un profilé, la génératrice du bombement s'étendant dans la direction de réglage.

21. Dispositif de fixation selon la revendication 19 ou 20, caractérisé par le fait que la partie de contrainte (9) est formée par trois branches (49) en forme de plaques, séparées les unes des autres par des espaces intercalaires (50) sensiblement verticaux, parmi lesquelles les deux branches extérieures sont bombées à l'écart l'une de l'autre, l'espace intercalaire (50) tourné vers l'élément central étant, lui aussi, bombé vers l'extérieur.

22. Dispositif de fixation selon la revendication 19, caractérisé par le fait que l'extrémité de pénétration (51) de la partie de contrainte (9) présente au moins deux branches (48) qui sont séparées par l'intermédiaire d'au moins une fente (44) sensiblement horizontale, qui divergent avec léger décalage mutuel dans la position initiale et peuvent être déformées, en s'opposant à une force de rappel, jusqu'à une position dans laquelle elles sont sensiblement à fleur l'une de l'autre.

23. Dispositif de fixation selon l'une des revendications 1 à 22, caractérisé par le fait que le disque d'excentrique (10) est réalisé sous la forme d'un disque à cames et glisse, par ses cames, le long d'une contre-came (15) de l'organe de pression (14), l'organe de pression (14) étant exclusivement intercalé entre ce disque (10) à cames et la face interne de l'étrier élastique (12), et le disque (10) à cames comblant dans son étendue diamétrale, transversalement par rapport à la direction de coulissement de l'organe de pression (14), la hauteur du boîtier (21) ou du profilé (23) qui loge ce disque, tout comme l'organe de pression (14) lui-même.

24. Dispositif de fixation selon l'une des revendications 1 à 23, caractérisé par le fait qu'un coulissement peut être imprimé à l'organe de pression (14) lors de la rotation de la came (52), avec retard dans le temps par rapport au début de la rotation de la came (42).

25. Dispositif de fixation selon l'une des revendications 1 à 24, caractérisé par le fait que le disque (10) à cames présente sur son pourtour, avant la came (52) par rapport à la direction de rotation, une zone (54) configurée en arc de cercle qui, lorsque l'organe de pression (14) n'a accompli aucun coulissement, porte contre une zone curviligne (53) de la came de venue en prise de cet organe de pression (14), et sert de guide pour un premier mouvement de rotation ; par le fait que la came (15) de venue en prise est également curviligne au voisinage de la came (52) proprement dite, au point initial de cette came (52), de sorte que ladite came (52) glisse tout d'abord le long de cet arceau sans aucun coulissement de l'organe de pression (14) ; et par le fait qu'il est prévu sur l'organe de pression (14), à l'extrémité de cet arceau (55), une surface inclinée (56) qui se rapproche du trajet de pivotement de la came, et coupe ce trajet.

26. Dispositif de fixation selon l'une des revendications 1 à 25, caractérisé par le fait que le ou les disque(s) (10) à cames présente(nt) une saillie (57), un tenon ou élément similaire, qui en dépasse latéralement dans le sens axial et coopère avec un arrondi (58) de venue en prise de la partie de contrainte (9), de préférence un pan incliné de cette partie de contrainte (9), qui s'étend à l'oblique par rapport au trajet de pivotement de cette saillie (57), et se rapproche de la portée rotative du disque (10) à cames ou d'excentrique.

27. Dispositif de fixation selon l'une des revendications 1 à 26, caractérisé par le fait que l'arrondi (58) de venue en prise de la partie de contrainte (9), de préférence réalisé sous la forme d'un pan incliné, débute directement au point initial du mouvement de la saillie (57) ou, pour le moins, plus près de ce point initial que la surface inclinée (56) de l'organe de pression (14), si bien que le coulissement de la partie de contrainte (9) commence plus tôt, dans le temps, que celui de l'organe de pression (14).

28. Dispositif de fixation selon l'une des revendications 1 à 27, caractérisé par le fait qu'un ensemble regroupé comprenant l'étrier élastique (12), la partie de contrainte (9) qui s'y trouve et les organes de pression (14), ainsi que des excentriques (10, 45) agissant sur ces dernières et la cheville (18) profilée dans la zone médiane (17), est maintenu cohérent dans le boîtier (21) configuré en U, par l'intermédiaire du ressort de pression (29) offrant un appui à l'étrier élastique (22), et peut être inséré dans l'extrémité frontale (22) d'un profilé creux (23), après enfoncement axial de la cheville (18), jusqu'à ce que cette cheville (18) rebondisse vers l'extérieur, par suite de sa force de rappel, sur la découpe (20) apprêtée dans le profilé (23).

29. Dispositif de fixation selon l'une des revendications 1 à 28, caractérisé par le fait que le boîtier (21) configuré en U comporte également, sur au moins l'une (59) des surfaces disposées à angle droit par rapport aux branches du U, de préférence sur les deux surfaces (59) formant un angle droit avec les branches du U, une obturation revêtant la forme d'une paroi de boîtier et façonnée, de préférence, par coudage d'au moins l'une des branches du U.

30. Dispositif de fixation selon l'une des revendications 1 à 29, caractérisé par le fait que deux pièces crochues (7), prévues en tant que pièces de retenue et tournées l'une vers l'autre par leurs ouvertures d'accrochage (8), sont écartées dans la position initiale, sont rapprochées l'une de l'autre en forme de pince ou à la manière de pincettes, lors de la rétraction des pièces de retenue (6), par l'intermédiaire d'éléments de contrainte (9) venant en prise extérieurement avec des rampes extérieures (13), et ceinturent les ailes (4) d'un profilé (5) en T ou organe similaire.

31. Dispositif de fixation selon la revendication 30, caractérisé par le fait que deux pièces de contrainte (9) disposées dans le boîtier (21) configuré en U, sur les parois latérales de celui-ci, agissent sur les rampes (13), dirigées vers l'extérieur, des pièces crochues (7) tournées l'une vers l'autre ; et par le fait que l'étrier élastique (12), portant notamment d'un seul tenant les crochets (7), s'étend entre ces pièces de contrainte (9) et loge, dans son espace interne, un organe de pression (14) associé à un disque d'excentrique (10).

32. Dispositif de fixation selon la revendication 30 ou 31, caractérisé par le fait que les deux pièces de contrainte (9), agissant sur la face externe des pièces de retenue (6), sont également soumises à l'action de disques d'excentriques (45) venant en prise avec des ouvertures au voisinage de la cheville (18), et peuvent être animées d'un coulissement en sens inverse de l'organe de pression (14).

33. Dispositif de fixation selon le préambule de la revendication 1, caractérisé par le fait qu'il présente un élément de verrouillage (60) ou élément analogue qui fait saillie au-delà de la face extrême de son boîtier (21) ou élément similaire, s'adapte dans l'ouverture du profilé complémentaire (5) et renferme, dans les limites internes de sa configuration, des pièces (6) de retenue ou crochues pouvant être écartées mutuellement, vers l'extérieur, par l'intermédiaire des surfaces latérales du verrou (60).

34. Dispositif de fixation selon la revendication 33, caractérisé par le fait que l'ouverture (61), délimitant les pièces de retenue (6) écartables vers l'extérieur, comporte deux tranchants (62) ou pièces coniques similaires qui sont tournées l'une vers l'autre et dont l'espacement peut être diminué, grâce à la rotation de l'excentrique (10), par rapprochement de l'un (62) des tranchants en direction de l'autre ; et par le fait que les tranchants (62) ou pièces similaires viennent en prise avec les pièces de retenue (6) et déplacent celles-ci latéralement, par suite de leur forme inclinée.

35. Dispositif de fixation selon la revendication 33 ou 34, caractérisé par le fait que l'élément de verrouillage (60) est soumis dans son espace interne, par l'intermédiaire de l'organe de pression (14), sur le côté opposé à son côté emboîtable dans le profilé complémentaire (5), à l'action de l'excentrique (10) et, de préférence, d'un disque d'excentrique (10) reposant sur une zone d'accouplement (17) d'une cheville profilée (18) ; par le fait que cet élément de verrouillage (60) est entouré par un étrier élastique (12) qui pénètre dans l'ouverture (61) de l'élément de verrouillage (60) et comporte des pattes (64) tournées l'une vers l'autre et formant, associativement, un tranchant (62) ou pièce similaire ; et par le fait que ces pattes (64) agissent sur l'une des faces extrêmes des pièces de retenue (6) mutuellement écartables, et le tranchant (62) de l'élément de verrouillage (60), pouvant être engagé dans le profilé complémentaire (5), agit sur l'autre face desdites pièces.

36. Dispositif de fixation selon l'une des revendications 1 à 35, caractérisé par le fait qu'il est prévu, entre l'étrier élastique (12) et l'élément de verrouillage (60), auquel des pivotements peuvent être imprimés par rapport à ce dernier à l'aide de l'excentrique (10), un ressort de pression (65) consistant, notamment, en une lame de ressort poinçonnée d'un seul tenant vers l'intérieur à partir de l'étrier élastique (12).

37. Dispositif de fixation selon l'une des revendications 1 à 36, caractérisé par le fait qu'au moins deux pièces de retenue (6), pouvant être écartées transversalement l'une de l'autre, sont disposées dos à dos dans l'évidement de verrouillage (61) et comportent, sur leurs côtés étroits tournés vers les tranchants (62), des rampes complémentaires (63) correspondant respectivement aux rampes des tranchants (62).

38. Dispositif de fixation selon l'une des revendications 1 à 37, caractérisé par le fait que l'évidement de verrouillage (61) renferme des pièces de retenue (6) qui sont mobiles en superposition vers différents côtés, et portent au moins en partie dans la position initiale, par leurs faces extrêmes, contre la rampe du tranchant (62) de l'élément de verrouillage (60) et contre le tranchant complémentaire, par lesquels elles peuvent être déplacées vers l'extérieur ; et par le fait que, au moins dans la région passant à travers l'ouverture (47) du profilé (5) dans la position d'utilisation, l'épaisseur de l'élément de verrouillage (60) correspond à la largeur de l'ouverture.

39. Dispositif de fixation selon l'une des revendications 1 à 38, caractérisé par le fait que l'élément de verrouillage (60) est formé par un ruban périphérique de traction (66), en particulier un ruban d'acier ou un ruban élastique qui assure, au voisinage de l'espace interne du profilé (5), la cohésion d'un corps (68) en forme de tranchant, muni d'une rainure (67) ou d'une configuration similaire, et la cohésion d'un organe de pression (14) à l'extrémité opposée à ce corps ; et par le fait que le corps d'écartement (68) en forme de tranchant est appliqué contre les pièces de retenue (6) dont la cohésion est assurée par l'étrier élastique (12).

40. Dispositif de fixation selon l'une des revendications 1 à 39, caractérisé par le fait que les extrémités (72) du ruban de traction (66) sont ancrées dans une saignée (73) de l'organe de pression (14) prévue, de préférence, à la face postérieure de l'organe de pression (14) qui est tournée à l'opposé du corps d'écartement (68) en forme de tranchant.

41. Dispositif de fixation selon l'une des revendications 1 à 40, caractérisé par le fait que les pièces de retenue (6) sont prolongées par rapport à l'ouverture (61) du verrou (60), entourent ce verrou et comportent, dans leur espace interne, un orifice cunéiforme (70) sur lequel agit le tranchant (62) du verrou (60).

42. Dispositif de fixation selon l'une des revendications 33 à 41, caractérisé par le fait qu'une partie du boîtier (21) est prolongée en tant que lame de ressort (71) à côté des pattes respectives (64) formant le tranchant (62), et vient en prise avec les pièces de retenue (6), en tant que ressort de rappel.

43. Dispositif de fixation selon l'une des revendications 1 à 42, caractérisé par le fait que la cheville (18) est à chaque fois montée, par ses deux appendices cylindriques (31), dans un évidement du boîtier (21) ou élément similaire ; et le boîtier (21) présente entre lui-même et le profilé (23), à l'extrémité opposée au côté actionnement (19) de la cheville (18), une butée (34) qui revêt notamment la forme d'une déformation rentrante, d'une gorge ou configuration similaire, et dont l'étendue, dans le sens axial de la cheville, correspond au moins à la course de coulissement de cette cheville (18) à l'encontre de la force d'un ressort de pression (39).

44. Dispositif de fixation selon la revendication 26, caractérisé par le fait que deux disques parallèles (10) à cames sont prévus, la saillie permettant la venue en prise avec la partie de contrainte (9) étant matérialisée par un goujon qui solidarise les deux disques (10) à cames et est fixé à ces deux disques (10) à cames, en étant de préférence emboîté dans des perçages alignés ; et/ou par le fait que les organes de pression (14) sont éventuellement reliés mutuellement, de préférence reliés d'un seul tenant dans leur région située en dehors de la course de coulissement de la partie de contrainte (9).

Fig. 1

Fig. 2

EP 0 238 848 B1

2

Fig. 7

Fig. 8

Fig. 9

Fig. 10

Fig. 11

Fig. 12

EP 0 238 848 B1

**Fig. 13**

**Fig. 14.**

*Fig. 15*

59

9

8

26

31

21

7

59

9

8

26

31

21

7

*Fig. 16*

6

*Fig. 17*

*Fig. 18*

*Fig. 19*

*Fig. 20*

*Fig. 21*

*Fig. 22*

*Fig. 23*

*Fig. 24*

*Fig. 25*

*Fig. 26*

*Fig. 27*

*Fig: 28*

Fig. 29

Fig. 30

Fig. 31

Fig. 32

_Fig. 33_

_Fig. 34_

_Fig. 35_

_Fig. 36_

14